# FASCICULE DE BREVET EUROPEEN

(11) **EP 3 656 903 B1**
(45) Date de publication et mention de la délivrance du brevet: **11.08.2021**
(21) Numéro de dépôt: 19210664.9
(22) Date de dépôt: 21.11.2019
(51) Int. Cl.: D03J 1/00, F01P 5/02, F04D 29/34, H02K 9/19

(54) **DISPOSITIF DE REFROIDISSEMENT D'UNE MACHINE DE FORMATION DE LA FOULE D'UN MÉTIER À TISSER**
KÜHLVORRICHTUNG EINER FACHBILDUNGSMASCHINE EINER WEBMASCHINE
DEVICE FOR COOLING A SHEDDING MACHINE OF A WEAVING LOOM

(30) Priorité: 21.11.2018 FR 1871676
(43) Date de publication de la demande: 27.05.2020
(73) Titulaire: Staubli Faverges, 74210 Faverges-Seythenex (FR)
(72) Inventeur: GUYOMAR, Grégory, 73460 Tournon (FR); POLLET, François, 74940 Annecy le Vieux (FR)
(74) Mandataire: Lavoix

(56) Documents cités:
- FR-A1- 2 944 808
- US-B1- 6 318 964

## Description

La présente invention concerne un dispositif de refroidissement d'une machine de formation de la foule, ainsi qu'une machine de formation de la foule et un métier à tisser.

L'invention a trait au domaine des métiers à tisser et de leurs machines de formation de la foule, en particulier au domaine des ratières et des mécaniques à cames, déterminant l'armure du tissu fabriqué par le métier, par commande des cadres de lisses du métier.

FR 3 043 098 B1 décrit un exemple de machine de formation de la foule pour métier à tisser, comprenant des leviers oscillants, destinés à actionner des cadres de lisses d'un métier à tisser, les leviers étant montés mobiles en rotation autour d'un arbre commun. Les leviers sont entraînés par un arbre de commande de la machine, actionné depuis l'extérieur du bâti. Cette machine connue comprend en outre un système de lubrification, incluant une pompe et un organe de distribution de lubrifiant vers des organes à lubrifier de la machine, notamment la liaison entre les leviers et l'arbre commun. Dans cette machine, le système mécanique embarqué, incluant les leviers oscillants et l'arbre de commande, est soumis à des vitesses élevées et des charges lourdes pour actionner les cadres de lisses, volumineux, à cadence élevée. De nombreuses pièces de la machine sont sollicitées en frottement et dégagent ainsi une chaleur importante en dépit de la lubrification, notamment si la machine est utilisée dans un environnement dans lequel la température ambiante est elle-même relativement chaude, par exemple en été. Cette émission de chaleur limite la cadence de travail de la machine, est susceptible de détériorer la machine et peut s'avérer préjudiciable pour l'environnement immédiat.

FR 2 944 808 A1 décrit un dispositif de formation de la foule pour métier à tisser incluant un radiateur, un ventilateur et à un circuit de refroidissement.

On connaît une autre machine de formation de la foule, qui est équipée d'un système de refroidissement, rapporté sur le bâti de la machine, afin d'évacuer la chaleur produite. Ce système de refroidissement comprend un échangeur thermique à circulation d'air, qui est actionné par un moteur électrique. Pour des raisons de sécurité, il convient de garantir que le moteur électrique fonctionne pendant le fonctionnement de la machine, ce qui constitue un inconvénient majeur de ce système connu. Pour cela, il faut notamment assurer l'alimentation en énergie électrique du moteur électrique, sa commande et son asservissement, en fonction du fonctionnement de la machine, et des systèmes de sécurité en cas de dysfonctionnement du système de refroidissement. Du fait de cette abondance de moyens, le système connu est relativement coûteux, présente un encombrement important et est difficile à mettre en oeuvre.

Par ailleurs, il existe un besoin d'améliorer les machines de formation de la foule préexistantes, qui ne sont pas nécessairement équipées de système de refroidissement ou dont le système de refroidissement manque d'efficacité.

L'invention vise donc à résoudre les inconvénients susmentionnés de l'art antérieur, en proposant un dispositif de refroidissement d'une machine de formation de la foule qui est facile à mettre en oeuvre, est peu encombrant, est sécuritaire et s'installe facilement sur une machine de formation de la foule préexistante.

L'invention a pour objet un dispositif de refroidissement d'une machine de formation de la foule d'un métier à tisser, le dispositif de refroidissement étant destiné à être entraîné par un arbre de commande de la machine de formation de la foule ou un arbre du métier à tisser et comprenant :
- un corps de dispositif de refroidissement, qui définit un passage de circulation d'air, reliant un passage d'entrée et un passage de sortie du corps, et
- un impulseur, qui est destiné à être entraîné en rotation par l'arbre, qui est disposé dans le passage de circulation d'air et qui comprend des ailettes aptes à entraîner la circulation d'air dans le passage de circulation d'air lorsque l'impulseur est entraîné en rotation par l'arbre.

Selon l'invention, l'impulseur est destiné à être assemblé sur l'arbre et comprend plusieurs secteurs complémentaires, chaque secteur comprenant :
- au moins l'une des ailettes et
- une ouverture radiale, par l'intermédiaire de laquelle le secteur est destiné à être monté sur l'arbre, l'ouverture radiale s'inscrivant sur un bord radial du secteur sur une largeur d'ouverture inférieure ou égale au diamètre de l'arbre.

Une idée à la base de l'invention est de prévoir que l'impulseur présente, d'une part, une configuration séparée, dans laquelle les secteurs sont séparés les uns des autres de sorte que leur ouverture radiale respective débouche radialement, en s'inscrivant sur un bord radial formant leur contour, et, d'autre part, une configuration assemblée, dans laquelle les secteurs sont assemblés les uns avec les autres, de façon que leurs ouvertures radiales respectives forment ensemble une ouverture d'entraînement de l'impulseur. L'ouverture d'entraînement, obtenue par combinaison des ouvertures radiales, définit alors avantageusement un profil fermé pour capturer l'arbre du métier à tisser. En d'autres termes, chaque ouverture radiale forme une portion de l'ouverture d'entraînement autour de l'arbre du métier à tisser.

Grâce à l'invention, le dispositif de refroidissement est facile à mettre en œuvre, puisqu'il n'est pas nécessaire de prévoir de moyen particulier pour entraîner l'impulseur, cet impulseur pouvant être entraîné directement par l'arbre de la machine de formation de la foule ou par un autre arbre du métier à tisser qui n'appartient pas à la machine de formation de la foule, via l'ouverture d'entraînement, lorsque l'impulseur est en configuration assemblée. De préférence, on choisit un arbre appartenant à la chaîne mécanique motrice du métier à tisser et servant à entraîner des leviers de sortie oscillants de la machine de formation de la foule, par exemple un arbre de commande de la machine de formation de la foule ou un arbre moteur du métier à tisser, entraînant de préférence l'arbre de commande de la machine de formation de la foule.

Le dispositif de refroidissement de l'invention est beaucoup moins encombrant que les systèmes de refroidissement de l'art antérieur qui embarquent un moteur spécifique, aucun moteur n'étant nécessaire dans le dispositif de refroidissement de l'invention. Il n'est pas non plus nécessaire de prévoir une courroie, ou tout moyen équivalent de transmission, pour entraîner l'impulseur, ce qui garantit la simplicité et la compacité du dispositif de refroidissement.

Le dispositif de refroidissement de l'invention peut facilement être rendu sécuritaire, si l'arbre du métier à tisser choisi pour entraîner l'impulseur est un arbre appartenant à la chaîne mécanique motrice du métier à tisser et/ou de la machine de formation de la foule. En effet, il est ainsi certain que l'impulseur est mis en rotation en même temps que le métier à tisser et/ou la machine de formation de la foule sont en fonctionnement.

Le dispositif de refroidissement peut facilement être installé sur une machine de formation de la foule préexistante, puisque l'impulseur se divise en plusieurs secteurs complémentaires, qui se répartissent sur la circonférence de l'arbre lorsque l'impulseur est en configuration assemblée. Par « complémentaire » on entend donc notamment que chaque secteur couvre une portion angulaire limitée, par exemple de 180°, ou une portion angulaire inférieure à 180°, par exemple de 90°. L'assemblage complémentaire des secteurs, le bord radial de l'un contre le bord radial de l'autre, couvre au total 360 degrés autour de l'axe central. Pour le montage de l'impulseur sur l'arbre, on présente l'impulseur en configuration séparée et on rapporte successivement les secteurs de l'impulseur sur les différentes portions correspondantes de la circonférence de l'arbre, les secteurs étant assemblés pendant cette mise en place sur l'arbre ou à l'issue de cette mise en place sur l'arbre. En effet, chaque ouverture radiale s'ouvrant sur une largeur d'ouverture inférieure ou égale au diamètre de l'arbre, chaque secteur peut être rapporté radialement sur l'arbre, pour que l'ouverture radiale accueille une portion de la circonférence de l'arbre, correspondant à la portion angulaire couverte par le secteur en question. Une fois tous les secteurs ainsi rapportés sur l'arbre, on obtient que l'impulseur est en configuration assemblée avec l'ouverture d'entraînement traversée par l'arbre, l'arbre étant alors capturé dans l'ouverture d'entraînement. Grâce à ces dispositions, l'impulseur peut donc être monté sur une partie intermédiaire de l'arbre du métier à tisser ou de la machine de formation de la foule sans nécessiter d'être enfilé sur l'arbre par l'extrémité de l'arbre, ce qui évite de démonter la machine de formation de la foule et/ou le métier à tisser.

Grâce à ce mode de montage facilité de l'impulseur, on peut facilement concevoir une nouvelle machine de formation de la foule ou un métier à tisser dans lequel le dispositif de refroidissement est facultatif. On intègre alors le dispositif de refroidissement à la machine ou au métier seulement si les besoins de l'utilisateur l'exigent.

D'autres caractéristiques avantageuses de l'invention sont définies dans ce qui suit :
- l'ouverture radiale de chaque secteur s'inscrit sur un profil ouvert de forme circulaire sur un arc de cercle inférieur ou égal à 180°.
- les secteurs de l'impulseur sont aptes à être assemblés autour de l'arbre, de façon axiale ou radiale.
- le dispositif comprend des moyens de solidarisation aptes à verrouiller l'assemblage des secteurs complémentaires de l'impulseur entre eux.
- le corps comprend au moins deux parties aptes à être assemblées autour de l'arbre, au moins une de ces parties comprenant une ouverture radiale s'inscrivant sur un bord radial de ladite partie : ladite ouverture radiale s'inscrivant sur une largeur d'ouverture supérieure au diamètre de l'arbre, ou ladite ouverture radiale s'inscrivant sur un profil ouvert de forme circulaire sur un arc de cercle égal ou inférieur à 180°.
- le passage d'entrée est traversé par l'arbre ; le passage de sortie est radial par rapport à l'arbre ; et l'impulseur entraîne la circulation de l'air de façon centrifuge depuis le passage d'entrée vers le passage de sortie.
- le dispositif de refroidissement comprend, au niveau du passage de sortie, des moyens de solidarisation à un échangeur thermique, l'échangeur thermique étant conçu pour assurer un échange de chaleur entre la machine de formation de la foule et l'air mis en circulation au travers du passage de circulation d'air, lorsque le dispositif de refroidissement équipe la machine de formation de la foule.
- le dispositif de refroidissement, comprend en outre l'échangeur thermique, qui est embarqué dans le dispositif de refroidissement.
- le corps comprend une volute, s'étendant autour d'une portion d'enveloppe de l'impulseur, pour guider la circulation d'air au travers du passage de circulation d'air du corps.
- le dispositif de refroidissement comprend en outre un filtre à air, qui occupe le passage d'entrée.
- le filtre à air comprend : une ouverture de filtre traversée par l'arbre ; une garniture de filtrage de l'air mis en circulation, obturant le passage d'entrée de façon à filtrer l'air mis en circulation ; et un support de garniture, par l'intermédiaire duquel la garniture est fixée au niveau du passage d'entrée, le support de garniture comprenant deux parties complémentaires assemblées, réparties axialement le long de l'arbre et formant un boîtier contenant la garniture de filtrage, chaque partie du support de garniture comprenant une ouverture radiale, qui est traversée par l'arbre, qui s'inscrit sur un bord radial de la partie concernée du support de garniture, sur une largeur d'ouverture supérieure au diamètre de l'arbre, ou ladite ouverture radiale s'inscrit sur un profil ouvert de forme circulaire sur un arc de cercle égal ou inférieur à 180°.

L'invention a également pour objet une machine de formation de la foule, de type ratière ou mécanique à cames, pour un métier à tisser, comprenant :
- un bâti ;
- des leviers de sortie, traversant le bâti ;
- un arbre commun, contenu dans le bâti et sur lequel sont montés les leviers de sortie ;
- un arbre de commande de la machine à formation de la foule, traversant le bâti et animant les leviers de sortie d'un mouvement d'oscillation alternative autour de l'arbre commun ; et
- un circuit de lubrifiant, comprenant :
   ∘ des conduites d'acheminement du lubrifiant dans la machine de formation de la foule, et
   ∘ une pompe de mise en circulation du lubrifiant dans le circuit de lubrifiant ; et
- un dispositif de refroidissement selon ce qui précède, qui est fixé au bâti, l'impulseur étant traversé par l'arbre de commande et solidarisé audit arbre de commande, ledit arbre de commande entraînant l'impulseur en rotation pour refroidir la machine de formation de la foule.

D'autres caractéristiques avantageuses de l'invention sont définies dans ce qui suit :
- la machine comprend un échangeur thermique intégré au bâti et formant un pont thermique entre l'air entraîné en circulation par l'impulseur, et la machine de formation de la foule, en particulier le lubrifiant circulant dans le circuit de lubrifiant.
- le dispositif de refroidissement comprend l'échangeur thermique, qui est embarqué dans le dispositif de refroidissement, l'échangeur thermique embarqué appartenant au dispositif de refroidissement et formant un échangeur air-lubrifiant, connecté en série au circuit de lubrifiant et formant un pont thermique entre le lubrifiant circulant en son sein et l'air entraîné en circulation par l'impulseur.
- la machine comprend un échangeur thermique qui comprend un circuit de fluide caloporteur, le circuit de fluide caloporteur formant un pont thermique entre le circuit de lubrifiant et l'air entraîné en circulation par l'impulseur.
- l'arbre de commande entraine la pompe de mise en circulation du lubrifiant de la machine de formation de la foule.

L'invention a également pour objet un métier à tisser comprenant une machine de formation de la foule selon ce qui précède.

L'invention a également pour objet un métier à tisser comprenant une machine de formation de la foule, de type ratière ou mécanique à cames, la machine de formation de la foule comprenant :
- un bâti ;
- des leviers de sortie, traversant le bâti ;
- un arbre commun, contenu dans le bâti et sur lequel sont montés les leviers de sortie ;
- un arbre de commande de la machine de formation de la foule, traversant le bâti et animant les leviers de sortie d'un mouvement d'oscillation autour de l'arbre commun ; et
- un circuit de lubrifiant, comprenant :
   ∘ des conduites d'acheminement du lubrifiant dans la machine de formation de la foule, et
   ∘ une pompe de mise en circulation du lubrifiant dans le circuit de lubrifiant ; et
- un dispositif de refroidissement selon ce qui précède, qui est fixé au métier à tisser, l'impulseur étant traversé par un arbre moteur du métier à tisser qui est distinct de l'arbre de commande de la machine de formation de la foule, et étant solidarisé audit arbre moteur, ledit arbre moteur entraînant l'impulseur en rotation pour refroidir la machine de formation de la foule.

D'autres caractéristiques de l'invention ressortent plus en détail de la description qui suit, présentant des modes de réalisation préférentiels de l'invention sans but limitatif, cette description faisant référence aux dessins annexés listés ci-dessous :
- [Fig 1] la figure 1 est une vue en perspective d'une machine de formation de la foule comprenant un dispositif de refroidissement selon un premier mode de réalisation conforme à l'invention ;
- [Fig 2] la figure 2 est une vue de face de la machine de formation de la foule de la figure 1 où des parties du dispositif de refroidissement ont été omises pour montrer l'intérieur du dispositif de refroidissement ;
- [Fig 3] la figure 3 est une coupe partielle selon le trait de coupe III-III de la figure 2, où un capot supérieur de la machine de formation de la machine a été omis pour montrer l'intérieur de la machine de formation de la foule ;
- [Fig 4] la figure 4 est une vue en perspective éclatée du dispositif de refroidissement des figures précédentes, représenté seul ;
- [Fig 5] la figure 5 est une vue en perspective éclatée d'un impulseur et d'un arbre appartenant à la machine de formation de la foule des figures précédentes ; et
- [Fig 6] la figure 6 est une vue en perspective d'un impulseur appartenant à une machine de formation de la foule selon un deuxième mode de réalisation conforme à l'invention.

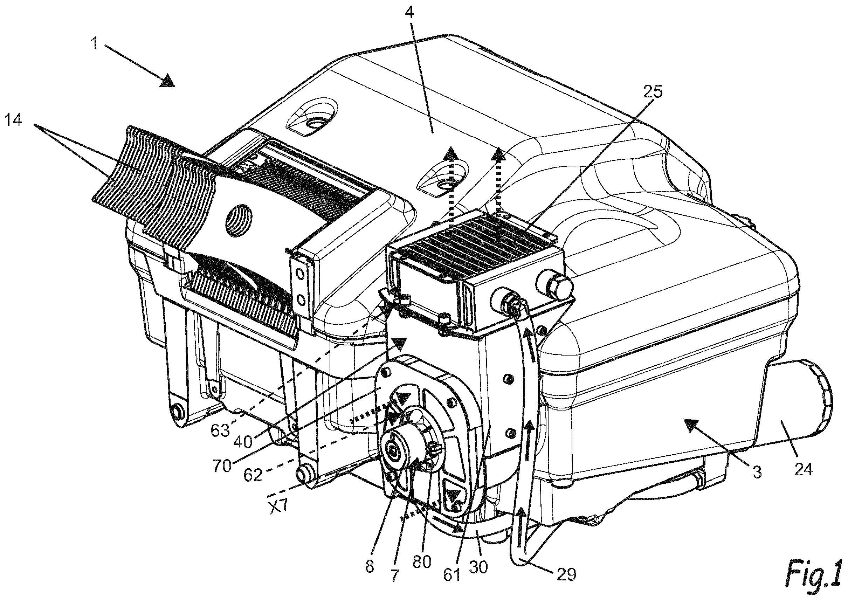

Les figures 1 à 5 montrent une machine de formation de la foule 1 conçue pour équiper un métier à tisser, lui-même non illustré. La machine 1 est une ratière rotative, c'est-à-dire un type particulier de machine de formation de la foule.

Sans sortir du cadre de l'invention, on pourrait prévoir que la machine 1 est une mécanique à cames.

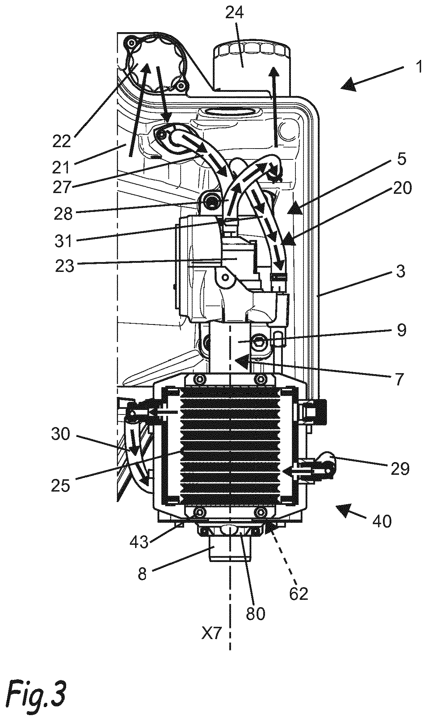

La machine 1 a pour fonction d'actionner des cadres de lisse du métier à tisser et ainsi de déterminer l'armure du tissu produit par le métier à tisser. La machine 1 comprend un bâti 3, comprenant un capot 4 amovible en partie supérieure. Le bâti 3 constitue une enveloppe de la machine 1, essentiellement fermée et rigide, délimitant un volume interne 5 de la machine 1, dont une partie est visible sur la figure 3. Dans le présent document, le bâti 3 est considéré comme une partie fixe de la machine 1, sauf indication contraire.

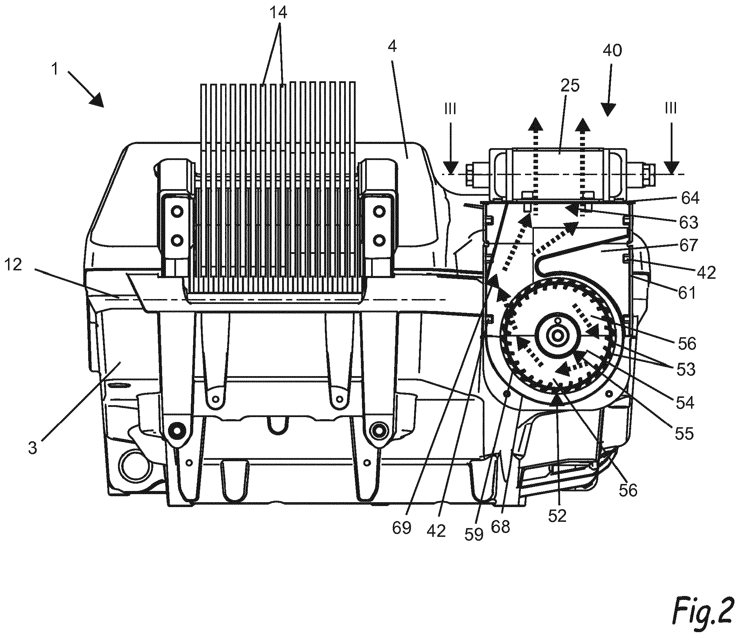

Dans le volume interne 5, la machine 1 comprend un arbre commun 12, parfois nommé « arbre des leviers », supporté par le bâti 3, à l'intérieur de ce bâti 3. L'arbre 12 est représenté schématiquement par un trait d'axe sur la figure 2. Un exemple d'arbre commun qui convient pour l'invention est décrit et illustré plus en détails dans FR 3 043 098. L'arbre 12 est disposé entre le capot 4 et le fond du bâti 3. L'arbre 12 est avantageusement fixe par rapport au bâti en étant supporté à ses extrémités par une paire de platines fixement attachées au bâti 3.

La machine 1 comprend des leviers de sortie 14, parfois nommés « lames ». En pratique, on peut prévoir par exemple entre six et seize leviers. Chaque levier 14 est préférentiellement de forme plane et fine, par exemple comme une plaque. Les leviers 14 sont répartis côte-à-côte le long de l'arbre 12, chaque levier 14 s'étendant dans un plan perpendiculaire à l'arbre 12. Les leviers 14 sont supportés par l'arbre 12, via un palier ou un roulement, de sorte à être individuellement mobiles en rotation autour de l'arbre 12. Chaque levier 14 est partiellement contenu dans le volume interne 5 et traverse le bâti 3, en particulier le capot 4, pour dépasser à l'extérieur, où les leviers 14 sont attelés aux cadres de lisses afin de les actionner et de former ainsi la foule.

La machine 1 comprend un arbre de commande 7, qui est rotatif autour de son axe propre X7. L'arbre de commande 7 étant un arbre de la machine 1, il appartient au métier à tisser. L'arbre de commande 7 traverse le bâti 3 de la machine 1, de sorte qu'une partie axiale 8 s'étend à l'extérieur du volume 5, et qu'une autre partie axiale 9 s'étend à l'intérieur, comme visible sur la figure 3. En fonctionnement du métier à tisser, l'arbre 7 est entraîné en rotation par un moteur appartenant au métier à tisser, extérieur à la machine 1, via la partie 8. Ainsi entraîné, l'arbre 7 anime les leviers 14 d'un mouvement d'oscillation alternative en rotation autour de l'arbre commun, par l'intermédiaire de moyens de transmission contenus dans le volume interne 5, qui diffèrent selon si la machine 1 est une ratière ou une mécanique à came.

La machine 1 comprend un circuit de lubrifiant 20, en boucle fermée. Le lubrifiant est par exemple une huile lubrifiante. Le circuit 20 distribue et récupère du lubrifiant dans le volume interne 5 pour la lubrification et le refroidissement de divers sous-ensembles de la machine 1, notamment des liaisons mécaniques telles que les liaisons de pivotement des leviers 14 autour de l'arbre commun 12, les différents paliers de support des arbres, notamment l'arbre 7, ainsi que les moyens de transmission de la rotation de l'arbre 7 en mouvement d'oscillation en rotation des leviers 14, incluant généralement un engrènement conique, des systèmes de lisage dans le cas d'une ratière, ou des systèmes à cames pour une mécanique à cames.

Le lubrifiant est mis en circulation dans le circuit 20 par une pompe 23 du circuit 20 contenue dans le volume 5, la circulation du lubrifiant étant représentée par des flèches sur les figures, en traits épais et continus. Le lubrifiant est également avantageusement filtré par des moyens de filtration du circuit 20, attachés au bâti 3, ici un filtre grossier 22 et un filtre fin 24. Le circuit de lubrifiant 20 comprend, connectés fluidiquement en série par diverses conduites 29 du circuit 20, dans l'ordre suivant de circulation du lubrifiant :
- un bac 21 de récupération de lubrifiant qui a servi à lubrifier les différentes parties de la machine, le bac 21 étant formé dans le fond du bâti 3,
- le filtre grossier 22, connecté au bac 21,
- la pompe 23, fixée autour de l'arbre 7, entrainée par l'arbre 7 et connectée au filtre 22, par exemple par l'intermédiaire d'une conduite 27 du circuit 20 contenue dans le volume 5,
- le filtre fin 24, connecté à la pompe 23, par exemple par l'intermédiaire d'une conduite 28 du circuit 20, contenue dans le volume 5,
- un échangeur thermique 25, connecté au filtre fin 24 par l'intermédiaire d'une conduite 29 du circuit 20, qui s'étend à l'extérieur du bâti 3,
- un ensemble de moyens, non représentés, de distribution du lubrifiant vers les parties de la machine 1 à lubrifier contenues dans le volume interne, ces moyens étant alimentés en lubrifiant par l'extrémité de la conduite 31, contenue dans le volume 5, la conduite 31 étant elle-même alimentée par une conduite 30 du circuit 20, qui s'étend à l'extérieur du bâti 3 pour relier la conduite 31 à l'échangeur 25.

L'ensemble des moyens de distribution forme par exemple un réseau de conduites et/ou de canaux qui débouchent sur les différents sous-ensembles internes de la machine 1 susmentionnés nécessitant d'être lubrifiés et/ou refroidis.

Pour être entraînée par l'arbre 7, la pompe 23 est agencée de façon à être traversée par l'axe X7. En particulier l'extrémité de la partie 8 de l'arbre 7 contenue dans le volume 5 entraîne la pompe 23. Ainsi, la circulation du lubrifiant est assurée lorsque la machine 1 est en fonctionnement.

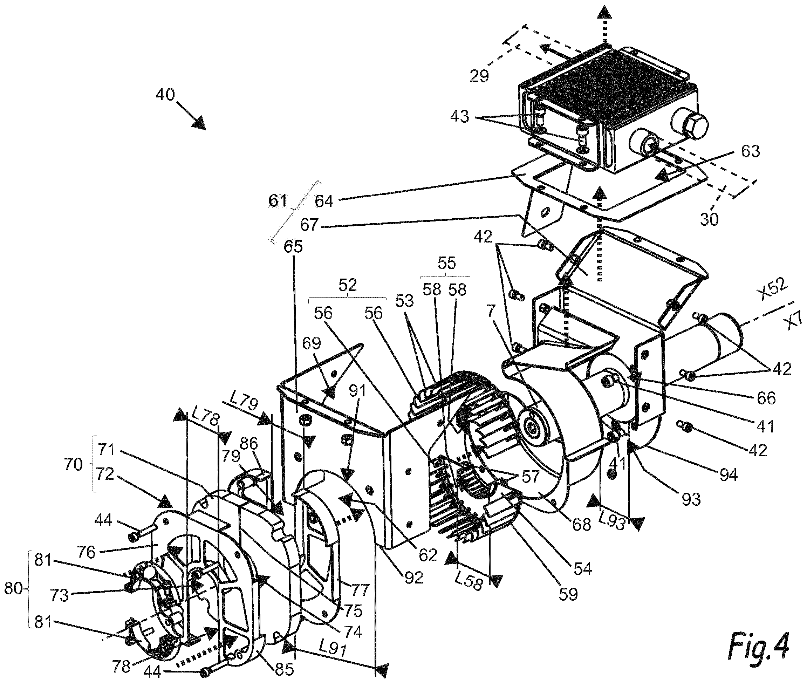

La machine 1 comprend un dispositif de refroidissement 40, représenté monté sur le bâti 3 sur les figures 1 à 3 et représenté seul, avec l'arbre 7, sur la figure 4. Lorsqu'il est monté sur la machine 1, le dispositif 40 vise à refroidir la machine 1 par convection forcée d'air provenant de l'extérieur à la machine 1. Dans le présent exemple, le dispositif 40 vise à refroidir la machine 1 en refroidissant le lubrifiant du circuit 20.

Dans le présent exemple, le dispositif 40 comprend en outre l'échangeur 25, de façon embarquée sur le dispositif 40. Lorsque le dispositif 40 équipe la machine, l'échangeur 25 est intégré au circuit de lubrifiant 20. Lorsque le dispositif 40 n'équipe pas la machine, le circuit 20 ne comprend plus l'échangeur 25. Dans le présent exemple donc, l'échangeur 25 appartient au dispositif 40.

De préférence, le dispositif 40 s'étend entièrement à l'extérieur du bâti 3 et est fixement attaché à la machine 1 par l'intermédiaire du bâti 3. La fixation du dispositif 40 à la machine 1 est préférentiellement amovible, de sorte que le dispositif 40 peut être attaché et à nouveau détaché de la machine 1, sans autre modification significative de ladite machine 1, notamment sans ouvrir le capot 4 et sans démonter l'arbre 7. Dans le présent exemple, le dispositif 40 embarquant l'échangeur 25, une absence du dispositif sur la machine 1 nécessite de reconnecter le circuit de lubrifiant 20 à l'emplacement des conduites 29 et 30, pour court-circuiter l'absence de l'échangeur 25 et connecter directement le filtre 24 à la conduite 31. Ce dispositif peut ainsi équiper un métier à tisser préexistant, de façon optionnelle.

De préférence, le dispositif 40 est attaché sur une surface extérieure du bâti 3 par des vis 41 visibles sur la figure 4, ou tout moyen d'attache fonctionnellement équivalent, accessibles depuis l'extérieur du bâti 3. Cela permet de rendre amovible la fixation du dispositif 40 sans démontage de la machine 1.

Le dispositif de refroidissement 40 fonctionne en mettant en circulation de l'air au travers de l'échangeur 25 afin de refroidir le lubrifiant de la machine 1. Pour cela, le dispositif de refroidissement 40 comprend un corps de dispositif de refroidissement 61, pour guider l'air, et un impulseur 52, pour mettre l'air en circulation afin que l'air soit ainsi guidé par le corps 61. Dans le cas où l'échangeur 25 est embarqué sur le dispositif de refroidissement 40, ledit échangeur 25 est attaché au corps 61, lorsque le dispositif 40 est assemblé.

Le corps 61 constitue ici la partie stator du dispositif de refroidissement 40, c'est-à-dire sa partie fixe, l'impulseur 52 étant la partie rotor du dispositif de refroidissement 40, c'est-à-dire sa partie destinée à être mise en rotation par rapport à la partie fixe.

L'échangeur 25 tel qu'illustré est localisé en aval du corps 61 par rapport au sens de circulation de l'air, c'est-à-dire est localisé en aval du passage de sortie 63 défini ci-après. L'échangeur 25 du présent exemple est donc un échangeur air-lubrifiant, connecté en série au circuit de lubrifiant 20, une circulation d'air étant forcée au travers de l'échangeur par le dispositif 40. Par exemple, il s'agit d'un échangeur à plaques, à tubes, à ailettes ou équivalent.

De préférence, le lubrifiant circule transversalement dans l'échangeur 25, de droite à gauche sur la figure 3, alors que l'air circule dans une direction perpendiculaire, ici de bas en haut, comme visible sur les figures 2 et 4. De préférence, l'air s'échappe de l'échangeur 25 par le dessus, en étant dirigé vers le haut, à l'extérieur de la machine 1.

Le lubrifiant et l'air se répandent dans l'échangeur 25 sans être mis en contact physique l'un avec l'autre, c'est-à-dire que le lubrifiant et l'air ne se touchent pas et ne se mélangent pas. Toutefois, on peut dire que le lubrifiant et l'air sont mis en contact thermique, puisqu'un transfert de chaleur est favorisé entre eux, du fait de leur séparation par un pont thermique. En effet, l'échangeur 25 forme un pont thermique entre le lubrifiant et l'air circulant en son sein, mis respectivement en circulation par la pompe 23 et par le dispositif 40. Dans le présent exemple, le pont thermique comprend avantageusement des parois à forte conductivité thermique, par exemple métalliques, de préférence sur une superficie conséquente. Ces parois séparent l'air et le lubrifiant en circulation, pour ainsi favoriser un transfert de chaleur depuis le lubrifiant jusqu'à l'air en circulation. Le lubrifiant refroidi par l'air de l'échangeur 25 est donc admis dans la conduite 30 avec une température abaissée et refroidit différents composants de la machine 1 en étant mis en circulation en son sein. L'impulseur 52 du dispositif de refroidissement 40 est réalisé en tout matériau approprié, par exemple en métal, en composite, ou en matière plastique polymérique. L'impulseur 52 du présent exemple, visible sur les figures 2 et 4, est un impulseur centrifuge, c'est-à-dire que la rotation de l'impulseur 52 crée une dépression au voisinage de l'axe propre X52 de l'impulseur 52, appelé « axe central », la dépression aspirant de l'air axialement, l'air étant mis en rotation par l'impulseur 52, ce qui rejette cet air radialement par effet centrifuge généré par la rotation.

Plus généralement, l'impulseur 52 est une roue, conçue pour être mise en rotation autour l'axe X52, afin de mettre l'air en circulation. En particulier, l'impulseur est du genre hélice.

L'impulseur 52 comprend des ailettes 53, ou palettes. Les ailettes 53 sont distribuées de façon régulière, en cercle, autour de l'axe X52 qui, lorsque le dispositif de refroidissement est monté sur la machine 1, est coaxial avec l'axe X7. Chaque ailette 53 s'étend sensiblement selon sa propre direction radiale par rapport à l'axe X52. Chaque ailette 53 présente avantageusement une forme de lame bombée, définissant un intrados tourné dans une direction radiale interne à l'impulseur 52, et un extrados tourné dans une direction radiale externe à l'impulseur 52. La direction radiale interne et la direction radiale externe sont propres à chaque ailette 53.

L'impulseur 52 comprend avantageusement une couronne 54, sur laquelle les ailettes 53 sont fixement attachées par l'une de leur extrémité axiale. La couronne 54 s'étend essentiellement dans un plan orthogonal à l'axe X52 et est coaxiale avec l'axe X52. Les ailettes 53 sont toutes disposées sur une même face de la couronne 54, à son contour extérieur.

L'impulseur 52 comprend une ouverture d'entraînement 55, ou moyeu, coaxialement traversée par l'axe X52 de l'impulseur 52, et donc par l'axe X7, une fois l'impulseur 52 monté sur la machine 1. Dans le présent exemple, l'impulseur 52 est monté sur l'arbre 7, avantageusement sur la partie axiale externe 8, par l'intermédiaire de son ouverture 55, afin d'être entraîné en rotation par l'arbre 7, autour de l'axe X7, lors du fonctionnement de la machine 1. La simultanéité de la rotation de l'impulseur 52 et de l'arbre 7 est donc assurée de façon particulièrement fiable, sans recourir à un moyen d'asservissement ou de commande. On assure également que la pompe 23 fonctionne en même temps que l'impulseur 52. De plus, la vitesse de l'impulseur 52 suit la vitesse du métier à tisser et répond ainsi à l'augmentation de température générée à des vitesses supérieures.

De préférence, l'ouverture 55 est formée au centre de la couronne 54, à son contour intérieur. L'ouverture 55 présente avantageusement une forme de court manchon cylindrique, à base circulaire, coaxial avec l'axe X52. La forme cylindrique est avantageusement de même diamètre que l'arbre 7, ce qui conditionne la complémentarité de l'ouverture 55 en vue de son assemblage sur l'arbre 7. Ce manchon, ou plus généralement l'ouverture 55, comporte avantageusement des stries axiales sur sa paroi intérieure afin de faciliter la solidarisation en rotation de l'impulseur 52 avec son arbre d'entraînement par serrage, ici l'arbre 7. Le diamètre intérieur de l'ouverture 55 est égal ou proche du diamètre extérieur de la portée de l'arbre 7 sur laquelle l'impulseur 52 est destiné à être fixé.

Dans l'exemple illustré, la forme de l'ouverture 55 est globalement annulaire mais pourrait alternativement être carrée, ou toute forme équivalente, apte à prendre appui et être bridée sur le diamètre extérieur de l'arbre 7.

L'impulseur 52 comprend plusieurs secteurs 56 complémentaires, ici deux secteurs 56. Dans une configuration séparée de l'impulseur 52, les secteurs 56 sont séparés, comme montré sur la figure 4. Dans une configuration assemblée de l'impulseur 52, les secteurs 56 sont assemblés, comme montré sur la figure 2. Chaque secteur 56 forme seulement une portion angulaire de l'impulseur 52 autour de l'arbre 7, et donc autour de l'axe X52. Chaque secteur 56 est une partie de l'impulseur 52 distincte et indépendante des autres secteurs 56, et complémentaires en forme pour former l'impulseur 52 par assemblage des secteurs. La somme des portions angulaires formées par chaque secteur 56 vaut 360 degrés, de façon à constituer l'impulseur 52 en entier une fois assemblés. Ici, par exemple, chacun des deux secteurs 56 forme une portion angulaire de 180 degrés. On prévoit que chaque secteur 56 forme une portion angulaire de 180 degrés, ou moins. Par exemple, on pourrait prévoir quatre secteurs 56 couvrant chacun une portion angulaire de 90 degrés.

Dans l'exemple illustré, chaque secteur 56 forme un demi-impulseur. Chaque secteur 56 est avantageusement constitué par une seule pièce, de préférence d'un seul tenant. De préférence, chaque secteur 56 est de forme identique aux autres secteurs 56. De préférence, chaque secteur 56 est obtenu par moulage ou injection de matière dans un moule, le moule étant identique pour tous les secteurs 56 de l'impulseur 52.

Chaque secteur 56 comprend au moins une ailette 53 de l'impulseur 52, ici quinze ailettes 53 de l'impulseur 52. De préférence, chaque secteur 56 comprend le même nombre d'ailettes 53 de l'impulseur 52 que les autres secteurs 56.

Chaque secteur 56 comprend de préférence une portion de la couronne 54, ici une demi-couronne.

Chaque secteur 56 comprend un bord radial 59. Le bord radial 59 est formé par la tranche du secteur 56, c'est-à-dire par son contour extérieur fermé. De préférence, le bord radial 59 s'étend dans un plan perpendiculaire à l'axe X52 et à l'arbre 7, une fois le secteur 56 monté. Une fois les secteurs 56 assemblés, le bord radial 59 de chaque secteur 56 forme de préférence une portion d'une circonférence externe de l'impulseur 52, cette circonférence externe étant de préférence également la circonférence externe de la couronne 54.

Comme visible sur la figure 4, chaque secteur 56 comprend une ouverture radiale 58, qui, en configuration assemblée des secteurs, forme une portion de l'ouverture 55, c'est-à-dire de son contour, ici une portion du manchon formant l'ouverture 55. Chaque ouverture radiale 58 s'inscrit sur le bord radial 59 du secteur 56, c'est-à-dire forme un creux dans ce bord radial 59. De préférence, l'ouverture radiale 58 s'inscrit sur une partie du bord radial 59 qui ne forme pas la circonférence externe de l'impulseur 52, mais qui passe par le centre de l'impulseur 52 une fois les secteurs 56 assemblés.

En configuration séparée de l'impulseur 52, chaque ouverture radiale 58 est radialement ouverte, pour permettre latéralement l'introduction de l'arbre 7 dans ladite ouverture radiale 58. Lorsque les secteurs 56 sont en configuration séparée, chaque ouverture radiale 58 décrit un contour en arc de cercle ou en portion de cylindre, permettant de disposer le secteur 56 autour de l'arbre 7 sans avoir à enfiler l'ouverture 55 par l'extrémité de l'arbre 7. Dans le présent exemple où l'on a deux secteurs 56 couvrant chacun une portion angulaire de 180°, chaque ouverture radiale 58 est avantageusement en forme de demi-cercle, ou de demi-cylindre.

Plus précisément, chaque ouverture radiale 58 est ouverte, avec une largeur d'ouverture L58, dans une direction radiale par rapport à l'axe X52. Egalement, chaque ouverture radiale 58 est ouverte dans les deux directions axiales opposées et parallèles à l'axe X52. Pour chaque secteur 56, la forme en arc de cercle ou en portion de cylindre de l'ouverture radiale 58 est coaxiale avec l'axe X52. On peut aussi considérer que, pour chaque secteur 56, la forme en arc de cercle ou en portion de cylindre de l'ouverture radiale 58 est coaxiale avec la portion de circonférence extérieure de l'impulseur 52 formée par ce même secteur 56.

Selon une définition préférentielle, la largeur d'ouverture L58 représente la distance qui relie deux extrémités du contour ouvert, ici en arc de cercle, de l'ouverture radiale 58. La largeur d'ouverture L58 est mesurée dans un plan perpendiculaire à l'axe X52. Dans le présent exemple où chaque secteur 56 couvre une portion angulaire de 180°, le diamètre de l'arc de cercle formant le contour ouvert de l'ouverture 58 est égal à la largeur d'ouverture L58. Chaque ouverture de secteur 56 s'étend dans une épaisseur de l'impulseur 52

Dans le cas illustré aux figures, pour permettre le positionnement du secteur 56, en particulier de l'ouverture radiale 58, sur l'arbre 7 de façon radiale par rapport à l'arbre 7, alors que l'impulseur 52 est en configuration séparée, l'ouverture 58 s'inscrit dans un arc de cercle égal à 180°. En d'autres termes, on prévoit que l'ouverture radiale 58 soit suffisamment ouverte radialement pour une introduction radiale de l'arbre 7 dans l'ouverture 58, de préférence jusqu'au fond de l'ouverture 58 ce qui permet l'assemblage des secteurs au plus près de l'arbre. Pour monter le secteur 56 sur l'arbre 7, il n'est pas nécessaire d'enfiler ledit secteur 56 axialement par l'extrémité de l'arbre 7, ce qui serait une introduction axiale. Les secteurs 56 sont rapportés successivement, ou en même temps, sur l'arbre 7, en étant assemblés de façon radiale ou axiale, jusqu'à obtenir la configuration assemblée.

Dans le cas où au moins l'un des secteurs 56 couvre une portion angulaire de moins de 180°, par exemple 90°, l'ouverture radiale du secteur concerné s'inscrit dans un arc de cercle inférieure à 180°, par exemple un arc de cercle dont la valeur d'angle est égale à celle de la portion angulaire couverte par le secteur concerné.

Plus généralement, chaque ouverture radiale 58 couvre une portion angulaire égale ou inférieure à une demi-circonférence, c'est-à-dire moins de 180 degrés.

De préférence, comme dans le présent exemple, la partie du bord radial 59 sur laquelle l'ouverture radiale 58 est formée en creux, relie la circonférence extérieure de l'impulseur 52 à une partie plus centrale, proche de l'axe X52. Ici, la partie du bord radial 59 sur laquelle est formée l'ouverture 58 est rectiligne et diamétrale. L'ouverture radiale 58 est ici située au milieu de cette partie rectiligne du bord radial 59. De préférence, comme c'est le cas pour le présent exemple, on prévoit que la partie du bord radial 59 portant l'ouverture radiale 58 et que la portion de circonférence de la couronne 54 formée par le secteur 56 constituent ensemble la totalité du bord radial 59 du secteur 56.

Les secteurs 56 sont initialement dans la configuration séparée, où ils sont séparés les uns des autres, embarquant chacun une portion de l'ouverture 55, formée par l'ouverture radiale 58 de chacun des secteurs 56. Les secteurs 56 sont assemblés de façon annulaire directement sur l'arbre 7 pour former l'impulseur 52 in situ, l'impulseur 52 ainsi formé étant alors dans sa configuration assemblée. L'arbre 7 est capturé dans l'ouverture 55 en configuration assemblée des secteurs 56. L'assemblage des secteurs 56 forme l'ouverture 55, en particulier, ferme le contour de l'ouverture 55. L'ouverture 55 à contour fermé est obtenue par combinaison de l'ouverture radiale 58 respective que porte chaque secteur 56. A cet égard, les ouvertures radiales 58 des secteurs 56 sont complémentaires. L'assemblage des secteurs 56 positionne et fixe radialement l'impulseur 52 sur l'arbre 7, de sorte que l'impulseur 52 devient coaxial avec l'axe X7. Cet assemblage lie également l'impulseur 52 à l'arbre 7 en rotation autour de l'axe X7.

Par l'assemblage des secteurs 56 de l'impulseur 52 autour de l'arbre 7, l'impulseur 52 est porté, bridé et entraîné en rotation par l'arbre 7.

Comme c'est le cas sur les figures, l'assemblage des secteurs 56 est par exemple effectué radialement, c'est-à-dire en assemblant les secteurs 56 les uns avec les autres selon des directions radiales, propres à chaque secteur 56, et réparties autour de l'axe X52.

Alternativement, on peut prévoir un assemblage axial des secteurs 56, c'est-à-dire que chaque secteur 56 est assemblé avec les autres selon une même direction parallèle à l'axe X52. Dans ce cas, par exemple, on rapporte d'abord deux secteurs 56 successifs radialement sur l'arbre 7, de sorte que les deux secteurs 56 sont axialement décalés le long de l'arbre 7, puis l'on rapproche axialement l'un des deux secteurs 56 de l'autre pour obtenir leur assemblage.

On peut prévoir que, notamment en cas d'assemblage radial des secteurs 56, en configuration assemblée, les bords radiaux 59 respectifs des secteurs 56 coïncident, c'est-à-dire sont rapportés l'un contre l'autre, de sorte que la couronne 54 est parcourue de jointures radiales formées par les paires de bords radiaux 59 en contact.

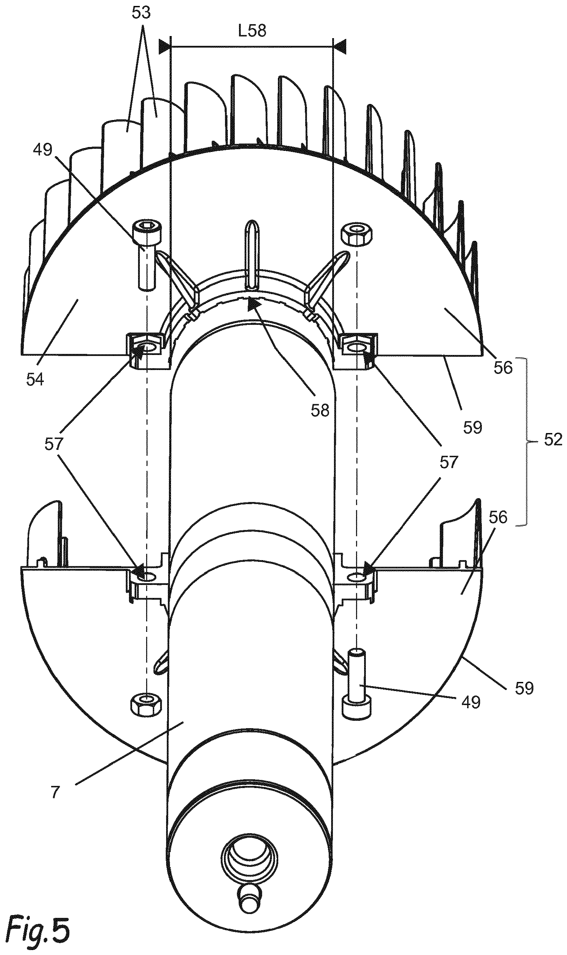

De préférence, les secteurs 56 sont verrouillés dans leur configuration assemblée à l'aide de vis ou tout moyen de solidarisation, de préférence réversible, de même fonction. Ici, les moyens de solidarisation comprennent deux boulons 49, introduits dans des orifices 57 portés par chaque secteur 56. Deux de ces orifices 57, appartenant au même secteur 56, sont montrés sur la figure 4. Sur la figure 5, chaque secteur 56 comporte deux orifices 57, répartis autour de l'arbre 7 et orientés de façon orthoradiale. Chacun des deux boulons 49 traverse à la fois l'un des orifices 57 du premier secteur 56 et du deuxième secteur 56 pour lier les deux secteurs selon un assemblage radial autour de l'arbre 7. Les boulons 49 sont avantageusement disposés radialement à l'extérieur de l'ouverture 55. En particulier les vis ou autres moyens sont disposés de façon orthoradiale par rapport à l'axe X52 lorsqu'un assemblage radial des secteurs 56 est prévu, afin de permettre un serrage des secteurs 56 sur l'arbre 7. L'impulseur 52 est alors solidarisé en rotation à l'arbre 7 par serrage radial des secteurs 56, voire, est en outre axialement fixé grâce à ce serrage.

Au lieu des boulons 49 et des orifices 57, tout autre moyen de solidarisation réversible, tel que des vis, écrous, attaches, clips, glissière, rainure, queue d'arronde, peut être mis en œuvre. Quel que soit le moyen de solidarisation choisi, il assure un montage facile dans un espace restreint, et garantit la montabilité et démontabilité du dispositif de refroidissement amovible.

Le corps 61 contient l'impulseur 52, c'est-à-dire que l'impulseur 52 est disposé dans le corps 61. Le corps de dispositif 61 constitue une partie fixe du dispositif 40, formant une enveloppe logeant l'impulseur 52 en son sein.

Le corps de dispositif de refroidissement 61 délimite un passage traversant, à savoir un passage de circulation d'air 69, ainsi que deux passages débouchants, à savoir un passage d'entrée 62 et un passage de sortie 63, entre lesquels s'étend le passage de circulation d'air 69. Ces passages 62, 63 et 69 sont aptes à laisser libre la circulation d'air au travers du corps 61. En d'autres termes, une extrémité du passage de circulation d'air 69, débouchant à l'extérieur du corps 61, forme le passage d'entrée 62 et l'autre extrémité du passage de circulation d'air 69, débouchant à l'extérieur du corps 61, forme le passage de sortie 63.

L'impulseur 52 est contenu dans le passage de circulation d'air 69, entre le passage d'entrée 62 et le passage de sortie 63. Le corps 61 est conçu pour guider l'air mis en circulation par l'impulseur 52, aspiré depuis le passage 62 et refoulé vers le passage 63. Ainsi, le corps 61 guide, c'est-à-dire dirige ou conduit, le flux d'air entrant par le passage 62, jusqu'au passage 63, via le passage de circulation d'air 69. L'air circule donc au travers du corps 61, du passage 62 au passage 63, via le passage 69, sous l'impulsion de l'impulseur 52. La circulation de l'air est représentée par des flèches sur les figures, en traits épais et discontinus.

Le corps 61 est semblable à un carter, un ensemble de tôles, de déflecteurs, qui forment des cloisons entre le passage d'entrée 62 et le passage de sortie 63, autrement dit entre l'aspiration et le refoulement. Autrement dit, le corps 61 limite un espace globalement fermé, hormis aux passages 62 et 63. En d'autres termes, le corps 61 forme par exemple un corps de turbine, un boîtier d'impulseur, un logement d'impulseur, un volume cloisonné par des parois attenantes à l'impulseur 52, ou une enveloppe fixe de l'impulseur 52.

Dans le présent exemple, l'impulseur 52 entraîne la circulation de l'air de façon centrifuge au sein du passage 69, depuis le passage d'entrée 62 vers le passage de sortie 63. Afin d'optimiser le flux d'air mis en circulation, le passage d'entrée 62 est traversé par l'axe central X52, c'est-à-dire, par l'arbre 7, et est tourné vers l'extérieur du bâti 3, par exemple vers l'avant du bâti 3, lorsque le dispositif 40 est monté. Le passage de sortie 63 est radial par rapport à l'axe X52, c'est-à-dire par rapport à l'arbre 7, et est tourné vers l'extérieur du bâti 3, en étant de préférence tourné vers le haut, lorsque le dispositif 40 est monté.

Dans le présent exemple, le corps 61 comprend une ouverture 66, axialement à l'opposé du passage 62, traversée par l'axe X52, et donc par l'axe X7, pour le passage de l'arbre 7. L'arbre 7 destiné à entrainer l'impulseur 52 traverse donc de part en part le corps de dispositif de refroidissement 61. Ici, c'est la partie 8 de l'arbre 7 qui traverse le corps de dispositif de refroidissement 61.

Dans le présent exemple, l'échangeur 25 est disposé sur le trajet de l'air refoulé au passage de sortie 63, en étant rapporté contre le passage de sortie 63, de sorte que l'air mis en circulation par l'impulseur 52 traverse l'échangeur 25 pour extraire de la chaleur du lubrifiant également mis en circulation au travers de l'échangeur 25. En effet, l'air étant à température ambiante, il tend à abaisser la température du lubrifiant, qui, en fonctionnement de la machine 1, est porté à une température supérieure à l'ambiante. Un échange de chaleur est ainsi assuré entre la machine 1 et l'air mis en circulation au travers du corps de dispositif de refroidissement 61, lorsque le dispositif 40 équipe la machine de formation de la foule 1 afin d'accélérer la convection thermique et le refroidissement de la machine 1 avec l'extérieur.

Au niveau du passage de sortie 63, le corps 61 du présent exemple comprend un cadre de support 64 portant des orifices pour le passage de vis, ou autre moyen de même fonction, pour la fixation de l'échangeur 25. Le cadre de support 64, de préférence en tôle métallique, délimite avantageusement le contour du passage de sortie 63. Plus généralement, le dispositif de refroidissement 40 comprend avantageusement tout moyen de solidarisation approprié pour solidariser le corps 61 et l'échangeur thermique 25 ensemble.

Afin de canaliser le mouvement d'air produit par l'action centrifuge de l'impulseur 52 dans le passage 69, entre une aspiration et un refoulement d'air, le corps 61 comprend une volute 68, s'étendant partiellement autour de l'impulseur 52, autour de l'axe X52. En particulier, la volute 68 s'étend seulement sur une portion d'enveloppe de l'impulseur 52, autour de l'axe X52. La volute 68 est une partie fixe par rapport au reste du corps 61 et par rapport à ses passages 62, 63 et 69. L'enveloppe est de forme proche d'un cylindre, rapproché des contours extérieurs de l'impulseur 52, notamment autour des ailettes 53, de façon à délimiter en son sein un volume entourant l'ensemble de l'impulseur 52. La volute 68 contribue à former le passage 69 avec d'autres parties du corps 61.

La circulation de l'air est donc guidée par la volute 68 au travers du corps de dispositif de refroidissement 61 depuis le passage d'entrée 62 vers le passage de sortie 63, via le passage 69. La volute 68 fait passer le flux d'air d'une orientation axiale, à l'entrée de l'impulseur 52 en provenance du passage 62, à une orientation radiale à la sortie de l'impulseur 52, en direction du passage 63. Avantageusement la volute 68 conduit le flux d'air en direction radiale vers l'unique passage de sortie 63 de façon à diriger et accélérer l'air vers l'unique échangeur thermique 25.

Avantageusement, le centrage des ailettes 53 sur l'axe X52, la répartition des ailettes 53 autour de l'axe X52 et le fait que les ailettes 53 soient d'égale longueurs radiales, garantit une efficacité de ventilation sur l'ensemble des ailettes 53, quelle que soit l'indexation en rotation de l'impulseur 52 autour de l'axe X52 par rapport au corps 61, lorsque le dispositif de refroidissement 40 est en fonctionnement grâce à l'entraînement de l'arbre 7 du métier.

Dans le présent exemple, la volute 68 comprend une partie inférieure formant une portion quasi-cylindrique autour de l'axe X52, et donc autour de l'axe X7. La partie inférieure est ouverte vers le haut de façon suffisante pour conduire le passage d'air vers le haut, et une partie supérieure, dans laquelle la partie inférieure débouche, formant un entonnoir divergeant en direction de l'échangeur. La volute 68 épouse un large secteur angulaire, c'est-à-dire une large portion de contour extérieur, de l'impulseur 52, et participe au guidage du flux d'air vers le passage de sortie 63 du corps de dispositif de refroidissement 61. Avantageusement, comme montré sur la figure 4, la volute 68 dispose d'une ouverture radiale s'inscrivant dans un profil étranglé, s'ouvrant sur une largeur d'ouverture supérieure au diamètre de l'arbre, afin que la volute 68 soit rapportée autour de l'arbre 7 par introduction radiale dudit arbre 7 dans l'ouverture radiale de la volute 68. De préférence la volute 68 est assemblée avec les parties du dispositif de refroidissement de façon axiale.

Dans le présent exemple, le corps 61 est, de manière avantageuse, un assemblage de plusieurs tôles métalliques initialement séparées qui le constituent. Ainsi, tout comme l'impulseur 52, le corps 61 évolue entre une configuration assemblée, qui est décrite ci-avant, et une configuration séparée. Chaque tôle du corps 61 forme une ou plusieurs parois ou cloison du corps 61. Ces tôles comprennent :
- une tôle de fixation 67, dont une paroi principale est orientée perpendiculairement à l'axe X52 et délimite au moins une partie supérieure l'ouverture 66 à l'aide d'une ouverture radiale 93 s'inscrivant sur un bord radial 94 de la tôle de fixation, le dispositif 40 étant fixé à la machine 1 via la partie principale de la tôle 67, les vis 41 ou moyens équivalents traversant pour cela avantageusement cette partie principale de la tôle 67 ;
- une tôle avant 65, dont une paroi principale est orientée perpendiculairement à l'axe X52 et délimite au moins une partie supérieure du contour du passage 62 à l'aide d'une ouverture radiale 91 s'inscrivant sur un bord radial 92 de la tôle avant 65 ;
- une tôle formant le cadre de support 64, parallèle à l'axe X52, venant fermer par le haut la partie tubulaire formée par l'ensemble de la tôle 65 et la tôle 67 pour coiffer le corps 61 avec le passage radial 63, le cadre 64 étant fixé sur des barrettes d'appui formées par les faces pliées des tôles 65 et 67, à l'aide de vis 43 ou de tout moyen de même fonction, ces vis 43 ou autre moyen fixant avantageusement également l'échangeur 25 embarqué ;
- une tôle arrondie formant la volute 68, essentiellement parallèle à l'axe X52 et partiellement cylindrique.

Les tôles avant 65 et de fixation 67 comportent avantageusement chacune une paire d'oreilles, parallèles à l'axe X52, pour être attachées ensemble par des vis 42, ou tout moyen de même fonction, de sorte que les tôles 65 et 67 forment ensemble une partie tubulaire du corps de dispositif de refroidissement 61.

En d'autres termes, le corps 61 comprend plusieurs parties complémentaires, ici des tôles.

La volute 68 est avantageusement positionnée et fixée radialement et axialement dans le corps 61, par assemblage des tôles 65 et 67, qui présentent des formes correspondantes à la volute 68. Les tôles 65 et 67 ferment axialement la volute 68 axialement de part et d'autre de ladite volute 68.

Plus généralement ici, plusieurs parties constitutives du corps de dispositif de refroidissement 61 sont donc avantageusement montées sur l'arbre 7 « en cavalier ».

Les bords radiaux 92 et 94 sont respectivement formés par la tranche ou le contour fermé de la tôle 65 ou 67 concernée, ou de sa paroi principale. De préférence, chaque bord radial 92 et 94 s'étend dans un plan perpendiculaire à l'axe X52 et à l'arbre 7 une fois le corps 61 monté.

Les ouvertures radiales 91 et 93 du corps 61 ont une géométrie similaire à celle définie ci-dessus pour les ouvertures radiales 58, de façon à pouvoir rapporter les tôles 65 et 67 radialement sur l'arbre 7, alors que ledit arbre 7 est destiné à traverser les ouvertures 62 et 66 lorsque le montage du dispositif 40 est effectué. Grâce aux ouvertures 91 et 93, le corps 61 peut être rapporté sur l'arbre 7 alors qu'il est en configuration séparée, sans que le corps 61 nécessite d'être enfilé par l'extrémité dudit arbre 7. Pour permettre une introduction radiale de l'arbre 7 dans les ouvertures 91 et 93 lors du montage du corps 61 sur l'arbre 7, alors que le corps est encore en configuration séparée, les ouvertures 91 et 93 s'ouvrent respectivement sur une largeur d'ouverture L91 et L93, chacune supérieure ou égale au diamètre de l'arbre 7. Dans l'exemple, la largeur d'ouverture L91 est supérieure au diamètre de l'arbre 7, alors que l'ouverture L93 est proche ou égale du diamètre de l'arbre 7.

L'ouverture radiale 91 est en forme de demi « O » en étant ouverte sur une moitié de circonférence autour de l'axe X52, soit sur 180°. L'ouverture 91 est à profil ouvert. L'ouverture 91 est ménagée en creux dans le bord radial 92 de la tôle 65. Dans l'exemple illustré, le contour ouvert de l'ouverture 91 forme un arc de cercle dont le diamètre est égal à la largeur d'ouverture L91.

L'ouverture radiale 93 est en forme de « U », en comportant une partie en arc de cercle, s'étendant sur plus de 180°, et une partie formant un canal étroit, délimité par deux bords parallèles, reliant la partie en arc de cercle au bord radial 94 de la tôle 67. Plus généralement, l'ouverture radiale 93 s'inscrit dans un profil étranglé. Dans le présent document, le profil étranglé peut également être désigné comme étant en forme de bouteille ou comme étant évasé vers le fond de l'ouverture, ou encore comme étant resserré à l'embouchure de l'ouverture. Dans l'exemple illustré, la distance entre les bords de la partie en canal est égale ou supérieure à la distance L93, alors que le diamètre de la partie en arc de cercle est supérieure à la distance L93.

En configuration assemblée, la partie inférieure de la volute 68 forme le fond du corps 61 et ferme les tôles 65 et 67 par le bas, et formant ainsi la partie inférieure du contour du passage 62 et du contour de l'ouverture 66. En d'autres termes, les ouvertures radiales 67 et 69 sont donc complétées par la volute 68 pour former respectivement le passage 62 et l'ouverture 66. Le passage 62 obtenu est avantageusement de forme circulaire, avec un diamètre supérieur à celui de l'arbre 7, ou de toute autre forme appropriée, permettant le passage du flux d'air autour de l'arbre 7 au travers du passage 62.

Le dispositif de refroidissement 40 comprend en outre un filtre à air 70, qui occupe le passage d'entrée 62 pour débarrasser l'air des poussières, notamment des poussières de fils, qu'il contient. Le filtre à air 70 est embarqué sur le dispositif 40, en étant rapporté sur le corps 61. Pour cela, le filtre 70 est par exemple fixé sur la paroi 65 à l'aide de vis 44 ou autres moyens de fixation équivalent.

Le filtre à air 70 est coaxialement traversé par l'axe X52, et donc par l'axe X7 et l'arbre 7, lorsque le dispositif 40 est monté sur la machine 1. Plus précisément, le filtre 70 est traversé par la partie 8 de l'arbre 7. Pour cela, le filtre 70 comprend une ouverture 73, dite « ouverture de filtre », coaxiale avec l'axe X52 et occupée par l'arbre 7 d'entraînement de l'impulseur 52. L'ouverture 73 traverse le filtre à air 70 de part en part, le long de l'axe X52.

Le filtre à air 70 comprend une garniture de filtrage 71 de l'air mis en circulation, obturant totalement le passage d'entrée 62 de façon à filtrer l'air mis en circulation au travers de ce passage 62. La garniture 71 comprend un orifice central 74, centré sur l'axe X52, conformé pour être traversé par l'arbre d'entraînement de l'impulseur 52, et une encoche radiale 75, reliant l'orifice central 74 à un bord radial de la garniture 71. L'orifice central 74 et l'encoche radiale 75 forment en semble une ouverture radiale qui s'inscrit sur un profil étranglé. Pour obtenir que tout ou l'essentiel de la section de passage de l'air soit obturé par la garniture 71 afin de filtrer l'air efficacement, on prévoit avantageusement, que la largeur d'ouverture de l'encoche radiale 75 est quasi-nulle, ou pour le moins très inférieure au diamètre de l'arbre 7, et on prévoit avantageusement que l'orifice central 74 est circulaire et de même diamètre, ou à peine supérieur, que l'arbre 7 qui le traverse. Le filtre 70, dans un matériau déformable de façon réversible, peut ainsi être monté radialement sur l'arbre d'entraînement de l'impulseur 52, sans avoir à l'enfiler par l'extrémité, par déformation réversible de l'encoche radiale 75 pour faire passer l'arbre radialement jusqu'à l'orifice 74.

Le filtre à air 70 comprend de préférence un support de garniture 72, par l'intermédiaire duquel la garniture 71 est fixée sur la paroi 65 au niveau du passage d'entrée 62.

Le support de garniture 72 comprend deux parties complémentaires 76 et 77, qui sont réparties axialement le long de l'axe X52, de part et d'autre de la garniture 71. Comme montré sur les figures 1 et 4, chaque partie 76 et 77 comprend une paroi principale orthogonale à l'axe central, ici l'axe X7, qui est axialement ajourée pour autoriser le passage de l'air aspiré par l'impulseur 52, successivement au travers de la partie 76, de la garniture 71 et de la partie 77. Les parties 76 et 77 sont assemblées par les vis 44, qui permettent également la fixation du support 72 au corps de dispositif 61. Les parties 76 et 77 comprennent des bordures complémentaires suivant le contour de chaque partie de garniture, de sorte que, une fois assemblées, les parties 76 et 77 forment une paroi périphérique complète et étanche pour le filtre, entourant radialement la garniture 71. Le filtre 70 est rapporté sur le corps 61, en particulier contre la paroi 65, par l'intermédiaire de la partie 77, la partie 76 étant tournée à l'opposé du corps 61.

Chaque partie 76 et 77 comprend un bord radial 85 ou 86 respectif. Chaque bord radial 85 et 86 est formé par la tranche de la partie 76 ou 77 concernée, c'est-à-dire par son contour fermé. De préférence, chaque bord radial 85 et 86 s'étend dans un plan perpendiculaire à l'axe X52 et à l'arbre 7, une fois le filtre 70 monté.

Chaque partie 76 et 77 comprend avantageusement une ouverture radiale 78 et 79 respective, qui s'inscrit sur le bord radial 85 ou 86 de la partie concernée. Chaque ouverture radiale 78 et 79 est ménagée dans la paroi principale de la partie 76 et 77 respective. Chaque ouverture radiale 78 et 79 présente une forme de « U » de façon à être radialement ouverte. En d'autres termes, pour chaque partie 76 et 77, l'ouverture 78 ou 79 concernée est traversée par l'axe X52. Chaque ouverture radiale 78 et 79 s'ouvre sur une largeur d'ouverture respective L78 et L79, qui est supérieure au diamètre de l'arbre sur lequel le filtre 70 est destiné à être monté. Chaque ouverture radiale 78 et 79 est avantageusement à profil ouvert. Selon le même principe que les autres pièces susmentionnées portant une ouverture radiale, pour le montage des parties 76 et 77 sur l'arbre, on introduit chaque partie 76 et 77 radialement sur l'arbre, par le bord radialement ouvert 85 ou 86 respectif de la partie 76 ou 77 concernée, via l'ouverture radiale 78 ou 79 concernée, jusqu'au fond de cette ouverture radiale 78 ou 79, de forme correspondante à celle de l'arbre. Chacune des parties constitutives du filtre 70 est donc avantageusement montée sur l'arbre 7 « en cavalier ».

En variante, le support de garniture pourrait comprendre plusieurs parties complémentaires, avec chacune une ouverture radiale inscrite sur un bord radial de son contour, et dont la largeur d'ouverture est inférieure au diamètre de l'arbre, mais l'ouverture s'ouvrant angulairement sur un arc de cercle de moins de 180°.

L'ouverture de filtre 73 est formée par la combinaison des ouvertures 78, 74 et 79, réparties dans cet ordre le long de l'axe X52.

De préférence, les deux parties 76 et 77 sont identiques pour faciliter leur fabrication, réalisée par exemple à l'aide d'un même moule. La garniture de filtrage 71 est avantageusement en mousse et épouse le volume formé par les deux parties 76 et 77, en laissant le passage aux quatre vis 44, au niveau d'encoches situées à chaque coin de la garniture. En alternative à la mousse, un filtre papier ou un filtre multi-membranes est envisageable.

Avantageusement, le filtre à air 70 centré sur l'arbre assure une répartition uniforme d'apport d'air autour de l'arbre, et vers l'ensemble des ailettes de l'impulseur.

De préférence, on rapporte une bague anti fil 80 sur l'arbre d'entraînement de l'impulseur 52, ici sur la partie 8 de l'arbre 7, en amont du filtre 70, ou, pour le moins, au passage d'entrée 62, afin d'éviter l'enroulement accidentel de fils autour de l'arbre. De préférence, selon le même principe que l'impulseur 52, la bague anti fil 80 comprend deux secteurs 81 assemblés radialement sur l'arbre 7, et fixés l'un à l'autre à l'aide de vis ou tout moyen de fonction équivalente.

Dans le présent exemple, pour fixer le dispositif 40 sur la machine 1, on monte d'abord la paroi 67 sur le bâti 3 à l'aide des vis 41. On rapporte ensuite l'impulseur 52, en l'attachant à l'arbre 7 grâce à ses secteurs 56 qui sont assemblés et verrouillés sur l'arbre 7. On rapporte ensuite la volute 68 autour de l'impulseur 52 en appui contre la paroi 67. On rapporte ensuite la paroi 65, ce qui fixe la volute 68, la paroi 65 étant fixée grâce aux vis 42. On rapporte ensuite le cadre 64 avec l'échangeur 25, fixés à l'aide des vis 43 sur les parois 65 et 67. On rapporte enfin le filtre 70 puis la bague anti fil 80.

Indépendamment de l'exemple préférentiel illustré aux figures 1 à 5 du corps 61 en parois de tôle assemblées, on prévoit avantageusement que, en l'absence de la volute 68, le passage 62 et l'ouverture 66 sont avantageusement ouverts sur une portion de leur contour, de façon à pouvoir être rapportées radialement sur l'arbre 7, ce qui évite de les enfiler par l'extrémité de l'arbre 7. Le montage de la volute 68, qui peut également se faire radialement autour de l'arbre 7, vient compléter et fermer le contour du passage 62 et de l'ouverture 66 pour emprisonner l'arbre 7 dans leur contour respectif.

Dans le mode de réalisation des figures 1 à 5, trente ailettes 53 sont prévues pour l'impulseur 52.

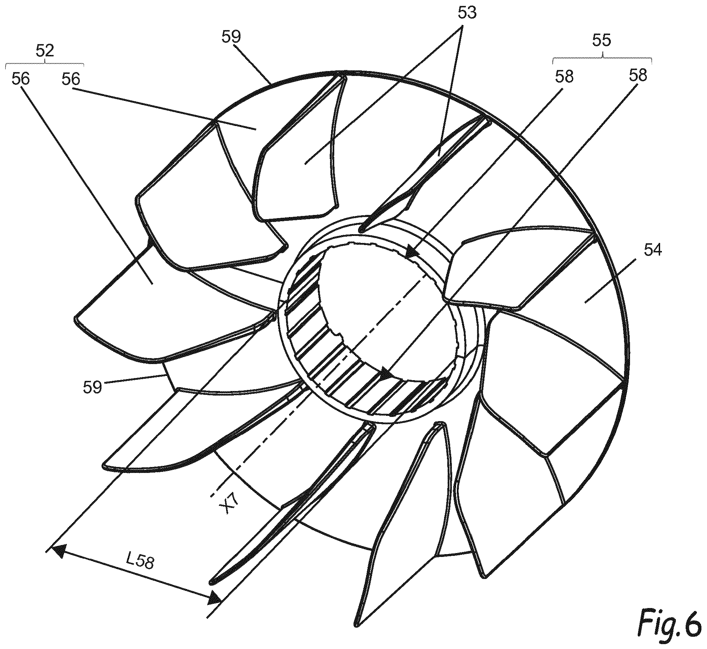

Le nombre, la forme, l'excentration et l'orientation des ailettes ont une influence sur la ventilation du dispositif et peuvent être adaptés. On peut prévoir un nombre différent d'ailettes 53 pour l'impulseur 52, et une forme différente pour ces ailettes. Par exemple, dans le mode de réalisation de la figure 6, pour lequel le métier à tisser et la machine de formation de la foule sont par ailleurs identiques à ceux du mode de réalisation des figures 1 à 5, l'impulseur 52 comprend seulement dix ailettes 53, plus larges.

Dans l'exemple illustré aux figures 1 à 5, le sens de rotation de l'arbre 7 est le sens des aiguilles d'une montre, si l'on regarde la figure 2. Aussi, la machine 1 est une machine où l'arbre 7 est à droite des leviers 14, alors qu'il existe des machines où l'arbre 7 est à gauche des leviers 14. Néanmoins, le dispositif 40 peut répondre à quatre configurations de machine :
- la machine 1, dont l'arbre de commande 7 est à droite et tourne en sens horaire ;
- une machine, dont l'arbre de commande est à gauche et tourne en sens antihoraire ;
- une machine, dont l'arbre de commande est à droite et tourne en sens horaire ;
- une machine, dont l'arbre de commande est à gauche et tourne en sens antihoraire.

Si le sens de rotation est inversé, il convient de changer le présent impulseur 52 pour un impulseur dont les ailettes sont à profil inversé, et de changer la présente volute 68 pour une volute à profil inversé. Toutefois, les autres éléments du dispositif 40 n'ont pas besoin d'être modifiés, étant symétriques ou quasi-symétriques par rapport à un plan vertical portant l'axe central X52. Le dispositif 40 est donc avantageux pour des opérations de modification d'une machine de formation de la foule, sur la base de ce dispositif 40 qui peut être adapté facilement à toute configuration de machine de formation de la foule.

En variante, l'impulseur 52 est constitué d'un nombre de secteurs 56 complémentaires supérieur à deux, par exemple trois, quatre ou plus. D'autres modes d'assemblage des secteurs 56 peuvent être prévus, par exemple par glissières, sans vis. Par exemple, pour l'assemblage des secteurs 56 de façon axiale, une rainure d'assemblage d'un secteur 56 peut recevoir une nervure d'assemblage du secteur 56 suivant. La rainure et la nervure complémentaires constituent des moyens de solidarisation des secteurs de l'impulseur.

En variante, l'échangeur 25 est disposé sur le trajet de l'air aspiré au passage d'entrée 62, en étant rapporté contre le passage d'entrée 62 plutôt que contre le passage de sortie 63. L'échange thermique est alors opéré entre l'air accéléré dans le passage d'entrée 62 et l'échangeur 25. Dans ce cas, les moyens de solidarisation de l'échangeur 25 sont prévus au niveau du passage d'entrée 62. L'air qui a récupéré les calories de la machine 1, en particulier du lubrifiant, à travers l'échangeur 25, traverse à température élevée le passage 69 du corps 61 pour être refoulé vers le passage de sortie 63. Dans cette variante, le filtre 70 est préférentiellement positionné en amont de l'échangeur 25, c'est-à-dire que l'échangeur 25 est interposé entre le filtre 70 et le passage d'entrée 62. En variante, le filtre 70 est en aval de l'échangeur 25, en étant interposé entre l'échangeur 25 et le passage d'entrée 62.

En variante, le pont thermique de l'échangeur 25 comprend un circuit de fluide caloporteur distinct du circuit de lubrifiant 20 et des passages 62, 63 et 69 du corps 61, de sorte que le liquide caloporteur, avantageusement mis en circulation, est fluidiquement séparé du lubrifiant et de l'air circulé. Le fluide caloporteur est préférentiellement un liquide, par exemple à base d'eau ou d'huile. Le circuit de fluide caloporteur peut par exemple traverser des conduits dédiés du bâti de la machine pour refroidir le bâti et le lubrifiant. Ce circuit de fluide caloporteur peut être prévu, que l'échangeur 25 soit embarqué ou non sur le dispositif de refroidissement 40.

En variante, on peut prévoir que l'échangeur 25 est un dissipateur à air fixé au bâti 3 de la machine et forme un pont thermique favorisant un échange thermique entre l'air mis en circulation par le dispositif 40 et la machine 1, le dissipateur comprenant alors avantageusement des parties en matériau conducteur de chaleur, par exemple en métal.

En variante, notamment si la machine de formation de la foule est préexistante, on peut prévoir que l'échangeur thermique 25 est intégré au bâti et n'appartient pas au dispositif de refroidissement. Dans ce cas, le dispositif de refroidissement est dépourvu d'échangeur thermique et comprend seulement le corps de dispositif et l'impulseur, qui mettent l'air en circulation en direction du bâti. Dès lors, pour installer le dispositif de refroidissement sur la machine de formation de la foule, on fixe avantageusement le dispositif de refroidissement de sorte que le passage de sortie débouche sur l'échangeur thermique, éventuellement par l'intermédiaire d'un conduit d'air.

En variante, on prévoit que le dispositif de refroidissement 40 est fixé à une partie du métier à tisser qui n'appartient pas à la machine 1. L'ouverture d'entraînement 55 de l'impulseur 52, ainsi que toute autre partie décrite ci-avant comme traversée par l'arbre 7, est traversée par un autre arbre moteur du métier à tisser, distinct de l'arbre 7. Cet arbre moteur est alors coaxial avec l'axe X52 de l'impulseur 52 et entraîne cet impulseur 52 en rotation pour la mise en circulation de l'air. Dans ce cas, on peut avantageusement prévoir de relier le corps de dispositif de refroidissement 61 à l'échangeur 25 par l'intermédiaire d'un conduite d'air, ou, si l'échangeur 25 est embarqué sur le dispositif 40, prévoir des conduites 29 et 30 de longueur adaptée pour intégrer l'échangeur au circuit de lubrifiant 20.

En variante, on prévoit que l'impulseur 52 a un fonctionnement centripète dans lequel les ailettes favorisent une circulation d'air depuis un espace radial vers le centre de l'impulseur, à l'inverse de l'impulseur 52 décrit ci-avant. Dans ce cas, le passage 62 devient le passage de sortie de l'air et le passage 63 devient le passage d'entrée de l'air.

En variante, on prévoit que l'impulseur 52 a un fonctionnement axial : on prévoit alors que les passages d'entrée et de sortie de corps de dispositif de refroidissement 61 sont axiaux, opposés l'un à l'autre par rapport à l'ouverture 55 de l'impulseur le long de l'axe X52.

En variante d'autres types d'impulseurs sont applicables à l'invention : un impulseur à effet réaction peut être utilisé en place de l'impulseur à action présenté ci-avant, ou également un impulseur de type « cage d'écureuil ».

En variante, on peut prévoir un mode de fonctionnement inversé du dispositif 40 illustré, où le sens de rotation de l'arbre de commande 7 est inversé, pour faire circuler l'air en sens inverse, c'est-à-dire du passage 63 au passage 62 via le passage 69. Cette opération peut avantageusement être mise en oeuvre pour repousser les poussières accumulées au niveau de la paroi externe du filtre 70 et ainsi nettoyer le filtre 70 pour restaurer son fonctionnement et améliorer le débit d'air. Cette opération peut être effectuée de façon cyclique et prédéterminée dans le temps.

En variante, le corps 61 est réalisé en tout matériau approprié autre que de la tôle métallique, par exemple en composite ou en matière plastique polymérique. Par exemple, on remplace chaque tôle 64, 65, 67 et 68 susmentionnée par une pièce dans un autre matériau.

En variante, le corps 61 comporte différentes tôles avec chacune une ouverture radiale et prévues pour être assemblées de manière axiale sur l'arbre 7.

En variante, le corps 61 comporte différentes tôles destinées à être assemblées radialement sur l'arbre 7, dont chaque ouverture radiale n'est pas circulaire et dont les bords sont destinés à être joints pour former un profil fermé d'ouverture de corps autour de l'arbre, tel qu'un profil polygonal ou carré.

En variante, l'impulseur 52 est monté sur son arbre d'entraînement par l'intermédiaire d'une pièce intermédiaire telle qu'un manchon, une entretoise, tout autre élément rapporté, qui sert de solidarisation de l'impulseur 52 sur l'arbre 7. La pièce intermédiaire peut aussi comprendre des éléments de boulonnerie tels que des vis en appui sur, ou directement fixés dans, l'arbre 7.

En variante, le support de garniture peut être un ensemble de parties complémentaires qui couvrent chacune un secteur angulaire du support et qui sont assemblées axialement et/ou radialement ensemble pour maintenir la garniture en place dans le passage d'entrée.

En variante, le passage de sortie 63, et de préférence l'échangeur 25, sont dirigés vers le bas plutôt que vers le haut pour des raisons thermiques.

En variante, tout ou partie des conduites 27, 28, 29, 30 et 31 sont remplacées par des canaux intégrés dans l'épaisseur du bâti 3, ou par tout moyen de transport de lubrifiant approprié.

En fonction de la situation, on peut prévoir une forme de « U » ou de demi « O » ou de « C », ou une autre forme, pour toutes les ouvertures radiales destinées à être rapportée sur un arbre du métier à tisser et étant décrites dans le présent document. Plus généralement, on prévoit que toutes les pièces du dispositif de refroidissement 40 qui doivent être traversées par un arbre du métier à tisser, ont une forme de fer à cheval, c'est-à-dire qu'elles ont une ouverture radiale, propre à permettre leur montage sur cet arbre de façon latérale.

Un profil ouvert est assimilé à un profil creux, ou concave. On oppose la notion de profil ouvert à celle de profil étranglé, le profil ouvert ouvrant le bord radial sans qu'aucune portion de contour entre ses extrémités de profil ne fasse face à une autre portion de contour, en opposition au profil étranglé, type profil en « C », pour lequel différentes portions de bords se font face. A l'opposé du profil ouvert et du profil étranglé, selon lesquels l'ouverture est radialement ouverte, une ouverture à profil fermé serait fermée sur tout son pourtour et ne permettrait l'introduction de l'arbre que par enfilement axial.

Chaque caractéristique décrite pour l'un des modes de réalisation ou variante ci-dessus peut être mise en oeuvre pour les autres modes de réalisation et variantes décrites ci-dessus.

## Revendications

1. Dispositif de refroidissement (40) d'une machine de formation de la foule (1) d'un métier à tisser, le dispositif de refroidissement étant destiné à être entraîné par un arbre (7) de commande de la machine de formation de la foule ou un arbre du métier à tisser et comprenant :
- un corps de dispositif de refroidissement (61), qui définit un passage de circulation d'air (69), reliant un passage d'entrée (62) et un passage de sortie (63) du corps (61), et
- un impulseur (52), qui est destiné à être entraîné en rotation par l'arbre (7), qui est disposé dans le passage de circulation d'air (69) et qui comprend des ailettes (53) aptes à entraîner la circulation d'air dans le passage de circulation d'air (69) lorsque l'impulseur (52) est entraîné en rotation par l'arbre (7),
**caractérisé en ce que**
l'impulseur (52) est destiné à être assemblé sur l'arbre (7) et comprend plusieurs secteurs (56) complémentaires, chaque secteur (56) comprenant :
- au moins l'une des ailettes (53) et
- une ouverture radiale (58), par l'intermédiaire de laquelle le secteur (56) est destiné à être monté sur l'arbre (7), l'ouverture radiale (58) s'inscrivant sur un bord radial (59) du secteur (56) sur une largeur d'ouverture (L58) inférieure ou égale au diamètre de l'arbre (7).

2. Dispositif de refroidissement (40) selon la revendication 1, dans lequel l'ouverture radiale (58) de chaque secteur (56) s'inscrit sur un profil ouvert de forme circulaire sur un arc de cercle inférieur ou égal à 180°.

3. Dispositif de refroidissement (40) selon l'une quelconque des revendications 1 ou 2, dans lequel les secteurs (56) de l'impulseur (52) sont aptes à être assemblés autour de l'arbre (7), de façon axiale ou radiale.

4. Dispositif de refroidissement (40) selon l'une quelconque des revendications précédentes, dans lequel le dispositif comprend des moyens de solidarisation (49, 57) aptes à verrouiller l'assemblage des secteurs (56) complémentaires de l'impulseur (52) entre eux.

5. Dispositif de refroidissement (40) selon l'une quelconque des revendications 1 à 4, dans lequel le corps (61) comprend au moins deux parties (61, 65, 67, 68) aptes à être assemblées autour de l'arbre (7), au moins une de ces parties (65, 67) comprenant une ouverture radiale (91, 93) s'inscrivant sur un bord radial (94) de ladite partie (67) :
- ladite ouverture radiale (93) s'inscrivant sur une largeur d'ouverture (L93) supérieure au diamètre de l'arbre (7), ou
- ladite ouverture radiale (91) s'inscrivant sur un profil ouvert de forme circulaire sur un arc de cercle égal ou inférieur à 180°.

6. Dispositif de refroidissement (40) selon l'une quelconque des revendications précédentes, dans lequel :
- le passage d'entrée (62) est traversé par l'arbre (7) ;
- le passage de sortie (63) est radial par rapport à l'arbre (7) ; et
- l'impulseur (52) entraîne la circulation de l'air de façon centrifuge depuis le passage d'entrée (62) vers le passage de sortie (63).

7. Dispositif de refroidissement (40) selon l'une quelconque des revendications précédentes, dans lequel le dispositif de refroidissement (40) comprend, au niveau du passage de sortie (63), des moyens (43, 64) de solidarisation à un échangeur thermique (25), l'échangeur thermique (25) étant conçu pour assurer un échange de chaleur entre la machine de formation de la foule (1) et l'air mis en circulation au travers du passage de circulation d'air (69), lorsque le dispositif de refroidissement (40) équipe la machine de formation de la foule (1).

8. Dispositif de refroidissement (40) selon la revendication 7, comprenant en outre l'échangeur thermique (25), qui est embarqué dans le dispositif de refroidissement (40).

9. Dispositif de refroidissement (40) selon l'une quelconque des revendications précédentes, dans lequel le corps (61) comprend une volute (68), s'étendant autour d'une portion d'enveloppe de l'impulseur (52), pour guider la circulation d'air au travers du passage de circulation d'air (69) du corps (61).

10. Dispositif de refroidissement (40) selon l'une quelconque des revendications précédentes, dans lequel le dispositif de refroidissement (40) comprend en outre un filtre à air (70), qui occupe le passage d'entrée (62).

11. Dispositif de refroidissement (40) selon la revendication 10, dans lequel le filtre à air (70) comprend :
- une ouverture de filtre (73) traversée par l'arbre (7) ;
- une garniture de filtrage (71) de l'air mis en circulation, obturant le passage d'entrée (62) de façon à filtrer l'air mis en circulation ; et
- un support de garniture (72), par l'intermédiaire duquel la garniture (71) est fixée au niveau du passage d'entrée (62), le support de garniture (72) comprenant deux parties (76, 77) complémentaires assemblées, réparties axialement le long de l'arbre (7) et formant un boîtier contenant la garniture de filtrage (71), chaque partie (76, 77) du support de garniture (72) comprenant une ouverture radiale (78, 79), qui est traversée par l'arbre (7), qui s'inscrit sur un bord radial (85, 86) de la partie (76, 77) concernée du support de garniture (72), sur une largeur d'ouverture (L78, L79) supérieure au diamètre de l'arbre (7), ou ladite ouverture radiale (78, 79) s'inscrit sur un profil ouvert de forme circulaire sur un arc de cercle égal ou inférieur à 180°.

12. Machine de formation de la foule (1), de type ratière ou mécanique à cames, pour un métier à tisser, comprenant :
- un bâti (3) ;
- des leviers de sortie (14), traversant le bâti (3) ;
- un arbre commun (12), contenu dans le bâti (3) et sur lequel sont montés les leviers de sortie (14) ;
- un arbre de commande (7) de la machine à formation de la foule (1), traversant le bâti (3) et animant les leviers de sortie (14) d'un mouvement d'oscillation alternative autour de l'arbre commun (12) ; et
- un circuit de lubrifiant (20), comprenant :
∘ des conduites (27, 28, 29, 30, 31) d'acheminement du lubrifiant dans la machine de formation de la foule (1), et
∘ une pompe (23) de mise en circulation du lubrifiant dans le circuit de lubrifiant (20) ; et
- un dispositif de refroidissement (40) selon l'une quelconque des revendications 1 à 11, qui est fixé au bâti (3), l'impulseur (52) étant traversé par l'arbre de commande (7) et solidarisé audit arbre de commande (7), ledit arbre de commande (7) entraînant l'impulseur (52) en rotation pour refroidir la machine de formation de la foule (1).

13. Machine de formation de la foule (1) selon la revendication 12, comprenant un échangeur thermique intégré au bâti (3) et formant un pont thermique entre :
- l'air entraîné en circulation par l'impulseur (52), et
- la machine de formation de la foule, en particulier le lubrifiant circulant dans le circuit de lubrifiant (20).

14. Machine de formation de la foule (1) selon la revendication 12, dans laquelle le dispositif de refroidissement (40) est conforme à la revendication 8, l'échangeur thermique embarqué (25) appartenant au dispositif de refroidissement (40) et formant un échangeur air-lubrifiant, connecté en série au circuit de lubrifiant (20) et formant un pont thermique entre le lubrifiant circulant en son sein et l'air entraîné en circulation par l'impulseur (52).

15. Machine de formation de la foule (1) selon la revendication 12, comprenant un échangeur thermique qui comprend un circuit de fluide caloporteur, le circuit de fluide caloporteur formant un pont thermique entre le circuit de lubrifiant (20) et l'air entraîné en circulation par l'impulseur (52).

16. Machine de formation de la foule (1) selon l'une quelconque des revendications 12 à 15, dans laquelle l'arbre de commande (7) entraine la pompe (23) de mise en circulation du lubrifiant de la machine de formation de la foule (1).

17. Métier à tisser comprenant une machine de formation de la foule (1) selon l'une quelconque des revendications 12 à 16.

18. Métier à tisser comprenant une machine de formation de la foule (1), de type ratière ou mécanique à cames, la machine de formation de la foule (1) comprenant :
- un bâti (3) ;
- des leviers de sortie (14), traversant le bâti (3) ;
- un arbre commun (12), contenu dans le bâti (3) et sur lequel sont montés les leviers de sortie (14) ;
- un arbre de commande (7) de la machine de formation de la foule (1), traversant le bâti (3) et animant les leviers de sortie (14) d'un mouvement d'oscillation autour de l'arbre commun (12) ; et
- un circuit de lubrifiant (20), comprenant :
∘ des conduites (27, 28, 29, 30, 31) d'acheminement du lubrifiant dans la machine de formation de la foule (1), et
∘ une pompe (23) de mise en circulation du lubrifiant dans le circuit de lubrifiant (20) ; et
- un dispositif de refroidissement (40) selon l'une quelconque des revendications 1 à 11, qui est fixé au métier à tisser, l'impulseur (52) étant traversé par un arbre moteur du métier à tisser qui est distinct de l'arbre de commande (7) de la machine de formation de la foule (1), et étant solidarisé audit arbre moteur, ledit arbre moteur entraînant l'impulseur (52) en rotation pour refroidir la machine de formation de la foule (1).

## Patentansprüche

1. Kühlvorrichtung (40) einer Fachbildungsmaschine (1) einer Webmaschine, wobei die Kühlvorrichtung vorgesehen ist, von einer Antriebswelle (7) der Fachbildungsmaschine oder einer Welle der Webmaschine angetrieben zu werden und umfasst:
- einen Körper (61) der Kühlvorrichtung, der einen Luftströmungskanal (69) definiert, der einen Einlasskanal (62) mit einem Auslasskanal (63) des Körpers (61) verbindet, und
- ein Laufrad (52), das vorgesehen ist, von der Welle (7) zur Drehung angetrieben zu werden, das in dem Luftströmungskanal (69) angeordnet ist und Flügel (53) aufweist, die geeignet sind, die Zirkulation von Luft in dem Luftströmungskanal (69) zu verursachen, wenn das Laufrad (52) von der Welle (7) zur Drehung angetrieben wird,
**dadurch gekennzeichnet, dass** das Laufrad (52) zur Montage auf der Welle (7) vorgesehen ist und eine Vielzahl von komplementären Sektoren (56) umfasst, wobei jeder Sektor (56) umfasst:
- mindestens einen der Flügel (53) und
- eine radiale Öffnung (58), über die der Sektor (56) zur Montage auf der Welle (7) vorgesehen ist, wobei die radiale Öffnung (58) auf einem radialen Rand (59) des Sektors (56) über eine Öffnungsbreite (L58), die kleiner oder gleich dem Durchmesser der Welle (7) ist, einbeschrieben ist.

2. Kühlvorrichtung (40) nach Anspruch 1, bei der die radiale Öffnung (58) jedes Sektors (56) auf einem offenen Profil von kreisförmiger Form über einen Kreisbogen von kleiner oder gleich 180° einbeschrieben ist.

3. Kühlvorrichtung (40) nach einem beliebigen der Ansprüche 1 oder 2, bei der die Sektoren (56) des Laufrads (52) geeignet sind, um die Welle (7) herum in axialer oder radialer Weise montiert zu werden.

4. Kühlvorrichtung (40) nach einem beliebigen der vorhergehenden Ansprüche, bei der die Vorrichtung Mittel (49, 57) zur Festlegung umfasst, die geeignet sind, die Anordnung der komplementären Sektoren (56) des Laufrads (52) untereinander zu verriegeln.

5. Kühlvorrichtung (40) nach einem beliebigen der Ansprüche 1 bis 4, bei der der Körper (61) mindestens zwei Teile (61, 65, 67, 68) umfasst, die geeignet sind, um die Welle (7) herum montiert zu werden, wobei mindestens einer dieser Teile (65, 67) eine radiale Öffnung (91, 93) umfasst, die in einen radialen Rand (94) des besagten Teils (67) einbeschrieben ist:
- wobei die radiale Öffnung (93) über eine Öffnungsbreite (L93) einbeschrieben ist, die größer ist als der Durchmesser der Welle (7), oder
- wobei die radiale Öffnung (91) auf einem offenen Profil von kreisförmiger Form über einen Kreisbogen gleich oder kleiner als 180° einbeschrieben ist.

6. Kühlvorrichtung (40) nach einem der vorhergehenden Ansprüche, bei der:
- der Einlasskanal (62) von der die Welle (7) durchgriffen wird;
- der Ausgangskanal (63) radial in Bezug auf die Welle (7) liegt; und
- das Laufrad (52) die Zirkulation der Luft in zentrifugaler Weise vom Einlasskanal (62) zum Auslasskanal (63) verursacht.

7. Kühlvorrichtung (40) nach einem beliebigen der vorhergehenden Ansprüche, bei der die Kühlvorrichtung (40) am Auslasskanal (63) Mittel (43, 64) zur Befestigung an einem Wärmetauscher (25) aufweist, wobei der Wärmetauscher (25) ausgebildet ist, einen Wärmeaustausch zwischen der Fachbildungsmaschine (1) und der durch den Luftströmungskanal (69) zirkulierenden Luft zu gewährleisten, wenn die Kühlvorrichtung (40) die Fachbildungsmaschine (1) ausrüstet.

8. Kühlvorrichtung (40) nach Anspruch 7, außerdem den Wärmetauscher (25), der in die Kühlvorrichtung (40) eingebunden ist, umfassend.

9. Kühlvorrichtung (40) nach einem beliebigen der vorhergehenden Ansprüche, bei dem der Körper (61) ein Spiralgehäuse (68) umfasst, das sich um einen Mantelabschnitt des Laufrads (52) erstreckt, um die Zirkulation der Luft durch den Luftströmungskanal (69) des Körpers (61) zu führen.

10. Kühlvorrichtung (40) nach einem beliebigen der vorhergehenden Ansprüche, bei der die Kühlvorrichtung (40) außerdem einen Luftfilter (70) aufweist, der in den Einlasskanal (62) eingesetzt ist.

11. Kühlvorrichtung (40) nach Anspruch 10, bei der der Luftfilter (70) umfasst:
- eine Filteröffnung (73), die von der Welle (7) durchgriffen wird;
- einen Filtereinsatz (71) für die zirkulierende Luft, der den Einlasskanal (62) verschließt, um die zirkulierende Luft zu filtern; und
- einen Einsatzhalter (72), mittels dessen der Einsatz (71) am Einlasskanal (62) befestigt ist, wobei der Einsatzhalter (72) zwei komplementäre Teile (76, 77) umfasst, die miteinander verbunden sind, axial entlang der Welle (7) verteilt sind und ein Gehäuse bilden, das den Filtereinsatz (71) enthält, wobei jedes Teil (76, 77) des Einsatzhalters (72) eine radiale Öffnung (78, 79) aufweist, die von der Welle (7) durchgriffen wird und die an einem radialen Rand (85, 86) des betreffenden Teils (76, 77) des Einsatzhalters (72) über eine Öffnungsbreite (L78, L79), die größer als der Durchmesser der Welle (7) ist, einbeschrieben ist, oder die radiale Öffnung (78, 79) an einem offenen Profil von kreisförmiger Form über einen Kreisbogen von gleich oder weniger als 180° einbeschrieben ist.

12. Fachbildungsmaschine (1) vom Typ Schaft- oder Nockenmaschine für eine Webmaschine, umfassend:
- einen Rahmen (3);
- Ausgangshebel (14), die durch den Rahmen (3) verlaufen;
- eine gemeinsame Welle (12), die im Rahmen (3) enthalten ist und auf der die Ausgangshebel (14) montiert sind;
- eine Antriebswelle (7) der Fachbildungsmaschine (1), die durch den Rahmen (3) verläuft und die Ausgangshebel (14) mit einer wechselnden Hin- und Herbewegung um die gemeinsame Welle (12) antreibt; und
- einen Schmiermittelkreis (20), umfassend:
∘ Leitungen (27, 28, 29, 30, 31) zum Fördern des Schmiermittels in der Fachbildungsmaschine (1), und
∘ eine Pumpe (23) zum Umwälzen des Schmiermittels im Schmiermittelkreis (20); und
- eine Kühlvorrichtung (40) nach einem beliebigen der Ansprüche 1 bis 11, die an dem Rahmen (3) befestigt ist, wobei das Laufrad (52) von der Antriebswelle (7) durchgriffen wird und an der Antriebswelle (7) befestigt ist, wobei die Antriebswelle (7) das Laufrad (52) zur Kühlung der Fachbildungsmaschine (1) in Drehung versetzt.

13. Fachbildungsmaschine (1) nach Anspruch 12, die einen in den Rahmen (3) integrierten Wärmetauscher umfasst, der eine Wärmebrücke zwischen:
- der durch das Laufrad (52) zur Zirkulation angetriebenen Luft, und
- der Fachbildungsmaschine, insbesondere dem im Schmiermittelkreis (20) umlaufenden Schmiermittel bildet.

14. Fachbildungsmaschine (1) nach Anspruch 12, bei der die Kühlvorrichtung (40) nach Anspruch 8 ausgebildet ist, wobei der eingebundene Wärmetauscher (25) zur Kühlvorrichtung (40) gehört und einen Luft-Schmiermittel-Tauscher bildet, der in Reihe mit dem Schmiermittelkreis (20) verbunden ist und eine Wärmebrücke zwischen dem darin umlaufenden Schmiermittel und der durch das Laufrad (52) zur Zirkulation angetriebenen Luft bildet.

15. Fachbildungsmaschine (1) nach Anspruch 12, die einen Wärmetauscher umfasst, der einen Wärmeträgerfluidkreis umfasst, wobei der Wärmeträgerfluidkreis eine Wärmebrücke zwischen dem Schmiermittelkreis (20) und der durch das Laufrad (52) zur Zirkulation angetriebenen Luft bildet.

16. Fachbildungsmaschine (1) nach einem beliebigen der Ansprüche 12 bis 15, bei der die Antriebswelle (7) die Pumpe (23) zum Umwälzen des Schmiermittels der Fachbildungsmaschine (1) antreibt.

17. Webmaschine, die eine Fachbildungsmaschine (1) nach einem beliebigen der Ansprüche 12 bis 16 umfasst.

18. Webmaschine, die eine Fachbildungsmaschine (1) vom Typ Schaft- oder Nockenmaschine umfasst, wobei die Fachbildungsmaschine (1) umfasst:
- einen Rahmen (3);
- Ausgangshebel (14), die durch den Rahmen (3) verlaufen;
- eine gemeinsame Welle (12), die im Rahmen (3) enthalten ist und auf der die Ausgangshebel (14) montiert sind;
- eine Antriebswelle (7) der Fachbildungsmaschine (1), die durch den Rahmen (3) verläuft und die Ausgangshebel (14) mit einer wechselnden Hin- und Herbewegung um die gemeinsame Welle (12) antreibt; und
- einen Schmiermittelkreis (20), umfassend:
∘ Leitungen (27, 28, 29, 30, 31) zum Fördern des Schmiermittels in der Fachbildungsmaschine (1), und
∘ eine Pumpe (23) zum Umwälzen des Schmiermittels im Schmiermittelkreis (20); und
- eine Kühlvorrichtung (40) nach einem beliebigen der Ansprüche 1 bis 11, die an der Webmaschine befestigt ist, wobei das Laufrad (52) von einer Motorwelle der Webmachine durchgriffen wird, die von der Antriebswelle (7) der Fachbildungsmaschine (1) verschieden ist und mit der Motorwelle verbunden ist, wobei die Motorwelle das Laufrad (52) zur Kühlung der Fachbildungsmaschine (1) in Drehung versetzt.

## Claims

1. A cooling device (40) for a shedding machine (1) of a weaving machine, the cooling device being suitable for being driven by a control shaft (7) of the shedding machine or a shaft of the weaving machine and comprising:
- a cooling device body (61), which defines an air circulation passage (69), linking an inlet passage (62) and an outlet passage (63) of the body (61), and
- an impeller (52), which is suitable for being rotated by the shaft (7), which is arranged in the air circulation passage (69) and which comprises fins (53) able to circulate air in the air circulation passage (69) when the impeller (52) is rotated by the shaft (7),
**characterized in that**
the impeller (52) is suitable for being assembled on the shaft (7) and comprises several complementary sectors (56), each sector (56) comprising:
- at least one of the fins (53), and
- a radial opening (58), by means of which the sector (56) is suitable for being mounted on the shaft (7), the radial opening (58) fitting on a radial edge (59) of the sector (56) over an opening width (L58) smaller than or equal to the diameter of the shaft (7).

2. The cooling device (40) according to claim 1, wherein the radial opening (58) of each sector (56) fits on a circular open profile over an arc of circle smaller than or equal to 180°.

3. The cooling device (40) according to any one of claims 1 or 2, wherein the sectors (56) of the impeller (52) are able to be assembled around the shaft (7), axially or radially.

4. The cooling device (40) according to any one of the preceding claims, wherein the device comprises securing means (49, 57) able to lock the assembly of the complementary sectors (56) of the impeller (52) to one another.

5. The cooling device (40) according to any one of claims 1 to 4, wherein the body (61) comprises at least two parts (61, 65, 67, 68) able to be assembled around the shaft (7), at least one of these parts (65, 67) comprising a radial opening (91, 93) fitting on a radial edge (94) of said part (67):
- said radial opening (93) fitting on an opening width (L93) greater than the diameter of the shaft (7), or
- said radial opening (91) fitting on a circular open profile over an arc of circle less than or equal to 180°.

6. The cooling device (40) according to any one of the preceding claims, wherein:
- the inlet passage (62) is passed through by the shaft (7);
- the outlet passage (63) is radial relative to the shaft (7); and
- the impeller (52) drives the circulation of the air centrifugally from the inlet passage (62) toward the outlet passage (63).

7. The cooling device (40) according to any one of the preceding claims, wherein the cooling device (40) comprises, at the outlet passage (63), means (43, 64) for securing a heat exchanger (25), the heat exchanger (25) being designed to ensure a heat exchange between the shedding machine (1) and the air circulated through the air circulation passage (69), when the cooling device (40) equips the shedding machine (1).

8. The cooling device (40) according to claim 7, further comprising the heat exchanger (25), which is embedded in the cooling device (40).

9. The cooling device (40) according to any one of the preceding claims, wherein the body (61) comprises a volute (68), extending around an envelope portion of the impeller (52), to guide the circulation of air through the air circulation passage (69) of the body (61).

10. The cooling device (40) according to any one of the preceding claims, wherein the cooling device (40) further comprises an air filter (70), which occupies the inlet passage (62).

11. The cooling device (40) according to claim 10, wherein the air filter (70) comprises:
- a filter opening (73) passed through by the shaft (7);
- a liner (71) for filtering the circulated air, closing off the inlet passage (62) so as to filter the circulated air; and
- a liner holder (72), by means of which the liner (71) is fastened at the inlet passage (62), the liner holder (72) comprising two assembled complementary parts (76, 77), distributed axially along the shaft (7) and forming a case containing the filtering liner (71), each part (76, 77) of the liner holder (72) comprising a radial opening (78, 79), which is passed through by the shaft (7), which fits on a radial edge (85, 86) of the affected part (76, 77) of the liner holder (72), over an opening width (L78, L79) greater than the diameter of the shaft (7), or said radial opening (78, 79) fits over a circular open profile over an arc of circle less than or equal to 180°.

12. A shedding machine (1), of the dobby or cam mechanism type, for a weaving machine, comprising:
- a frame (3);
- output levers (14), passing through the frame (3);
- a shared shaft (12), contained in the frame (3) and on which the output levers (14) are mounted;
- a control shaft (7) of the shedding machine (1), passing through the frame (3) and driving the output levers (14) in an alternating oscillating movement around the common shaft (12); and
- a lubricant circuit (20), comprising:
∘ pipes (27, 28, 29, 30, 31) for conveying lubricant into the shedding machine (1), and
∘ a pump (23) for circulating lubricant in the lubricant circuit (20); and
- a cooling device (40) according to any one of claims 1 to 11, which is fastened to the frame (3), the impeller (52) being passed through by the control shaft (7) and secured to said control shaft (7), said control shaft (7) being rotating the impeller (52) in order to cool the shedding machine (1).

13. The shedding machine (1) according to claim 12, comprising a heat exchanger integrated into the frame (3) and forming a thermal bridge between:
- the air circulated by the impeller (52), and
- the shedding machine, in particular the lubricant circulating in the lubricant circuit (20).

14. The shedding machine (1) according to claim 12, wherein the cooling device (40) is according to claim 8, the embedded heat exchanger (25) belonging to the cooling device (40) and forming an air-lubricant exchanger, connected in series to the lubricant circuit (20) and forming a thermal bridge between the lubricant circulating within it and the air circulated by the impeller (52).

15. The shedding machine (1) according to claim 12, comprising a heat exchanger that comprises a heat transfer fluid circuit, the heat transfer fluid circuit forming a thermal bridge between the lubricant circuit (20) and the air circulated by the impeller (52).

16. The shedding machine (1) according to any one of claims 12 to 15, wherein the control shaft (7) drives the pump (23) circulating lubricant for the shedding machine (1).

17. A weaving machine comprising a shedding machine (1) according to any one of claims 12 to 16.

18. A weaving machine comprising a shedding machine (1), of the dobby or cam mechanism type, the shedding machine (1) comprising:
- a frame (3);
- output levers (14), passing through the frame (3);
- a shared shaft (12), contained in the frame (3) and on which the output levers (14) are mounted;
- a control shaft (7) of the shedding machine (1), passing through the frame (3) and driving the output levers (14) in an oscillating movement around the common shaft (12); and
- a lubricant circuit (20), comprising:
∘ pipes (27, 28, 29, 30, 31) for conveying lubricant into the shedding machine (1), and
∘ a pump (23) for circulating lubricant in the lubricant circuit (20); and
- a cooling device (40) according to any one of claims 1 to 11, which is fastened to the weaving machine, the impeller (52) being passed through by a drive shaft of the weaving machine that is separate from the control shaft (7) of the shedding machine (1), and being secured to said drive shaft, said drive shaft driving the rotation of the impeller (52) in order to cool the shedding machine (1).
